# EUROPÄISCHE PATENTANMELDUNG

(11) **EP 1 555 456 A2**
(43) Veröffentlichungstag der Anmeldung: **20.07.2005**
(21) Anmeldenummer: 04030074.1
(22) Anmeldetag: 18.12.2004
(51) Int. Cl.: F16H 3/54

(54) **Steuerung eines Planetengetriebes mit einem Startergenerator im Nebenabtrieb durch Drehzahlsteuerung des Startergenerators**

(30) Priorität: 16.01.2004 DE 102004002346
(71) Anmelder: LuK Lamellen und Kupplungsbau Beteiligungs KG, 77815 Bühl (DE)
(72) Erfinder: Haas, Wolfgang, 77815 Bühl (DE); Friedmann, Oswald, 77839 Lichtenau (DE)

(57) **Zusammenfassung**

Ein Planetengetriebe (50) mit einem Kupplungsbetätigungselement, wobei das Kupplungsbetätigungselement eine Kulissenscheibe (8) mit Nut (8a) und einen in der Nut der Kulissenscheibe geführten Pin (9) umfasst, und die Kulissenscheibe und der Pin relativ zueinander um einen begrenzten Winkel verdrehbar sind. Ein Verfahren zum gezielten Schalten des Planetengetriebes, wobei das Schalten durch eine drehzahlsteuerbare Antriebseinheit durch gezieltes Beschleunigen oder Verzögern ihrer Drehzahl relativ zur Drehzahl des anderen Getriebeanschlusses erfolgt, indem sich der in der Nut der Kulissenscheibe geführte Pin relativ zu dieser um einen Winkel verdreht, und abhängig von der Größe der Winkeldrehung zwei bezüglich Öffnen und Schließen entgegengesetzt wirkende Kupplungseinheiten K1 und K2 einer Kupplung betätigt, die ein Umschalten von einer Übersetzungsstufe zur anderen ermöglichen.

## Beschreibung

Die vorliegende Erfindung betrifft ein Planetengetriebe mit den Komponenten Gehäuse, Sonnenrad, Hohlrad, Steg mit Planetenrädern, zwei bezüglich Öffnen und Schließen entgegengesetzt wirkenden Kupplungseinheiten K1 und K2 einer Kupplung, sowie einem Kupplungsbetätigungselement, wobei eine erste Komponente einen ersten Getriebeanschluss bildet und mit der Antriebswelle eines ersten Antriebsaggregats, vorzugsweise eines Verbrennungsmotors, verbindbar ist, und eine zweite Komponente einen zweiten Getriebeanschluss bildet, der vorzugsweise eine Riemenscheibe umfasst, wobei die erste und zweite Komponente durch die Kupplungseinheiten K1 oder K2 kraftschlüssig miteinander verbindbar sind.

Ferner betrifft die Erfindung ein Verfahren zum gezielten Schalten eines zwei Übersetzungsstufen umfassenden Planetengetriebes mit zwei Getriebeanschlüssen.

Planetengetriebe werden z. B. an Kurbelwellen von Verbrennungsmotoren eingesetzt, wobei Startergeneratoren im Nebenabtrieb betrieben werden, wie dies z. B. für Startergeneratoren und Verbrennungsmotoren umfassende Antriebseinheiten in der auf die Anmelderin zurückgehenden deutschen Patentanmeldung DE 199 41 705 A1 beschrieben ist. Dabei werden die Getriebeübersetzungsstufen selbsttätig als Funktion des Betriebsmodus des Getriebes bzw. der Antriebseinheit eingestellt, sodass z. B. während des Startvorgangs der Startergenerator mit einer Getriebeübersetzung untersetzt wird. Bei laufendem Verbrennungsmotor oder im Boosterbetrieb des Startergenerators hingegen erfolgt eine Reduktion der Getriebeübersetzung, um zu hohe Drehzahlen des als Generator wirkenden Startergenerators zu vermeiden, oder, um beim Boosterbetrieb, bei dem der Startergenerator als Elektromotor den Verbrennungsmotor unterstützt, eine höhere Kurbelwellendrehzahl als die Startdrehzahl zu ermöglichen.

Ferner sind Antriebseinheiten mit Planetengetrieben bekannt, bei denen die Getriebeübersetzung von außen geschattet wird. Ein Beispiel für eine geschaltete Kupplung ist in DE-PS 41 12 215 angegeben.

Bei den bekannten Planetengetrieben ist entweder ein Aktor zur Schaltung der Getriebeübersetzung notwendig, wodurch zusätzliche Kosten entstehen und sich auch die Störanfälligkeit und das Gewicht der Antriebseinheit erhöhen, oder, bei selbsttätig geschalteten Getrieben, ist ein gezieltes Schalten des Getriebes nicht möglich, wodurch z. B. beim Boosterbetrieb eine den Erfordernissen optimal angepasste gezielte Gangwahl nicht möglich ist.

Es ist die Aufgabe der vorliegenden Erfindung, diese Nachteile zu beseitigen und ein Planetengetriebe zu schaffen, welches in der Antriebseinheit keine zusätzlichen Aktoren zum Übersetzungswechsel benötigt und bei welchem während des Betriebs ein Übersetzungswechsel möglich ist.

Die vorliegende Aufgabe wird durch ein Planetengetriebe der eingangs genannten Art dadurch gelöst, dass das Kupplungsbetätigungselement eine Kulissenscheibe mit Nut und einen in der Nut der Kulissenscheibe geführten Pin umfasst, wobei Kulissenscheibe und Pin relativ zueinander um einen begrenzten Winkel verdrehbar sind.

Ferner wird die vorliegende Aufgabe durch ein Verfahren gelöst, bei dem ein gezieltes Schalten eines zwei Übersetzungsstufen umfassenden Planetengetriebes, mit zwei Getriebeanschlüssen, einer eine Nut umfassende Kulissenscheibe mit einem in der Nut geführten Pin zur Getriebesteuerung und zur Übertragung des Getriebedrehmoments, dadurch erfolgt, dass das Schalten mittels einer am zweiten Getriebeanschluss angreifenden drehzahlsteuerbaren Antriebseinheit durch gezieltes Beschleunigen oder Verzögern ihrer Drehzahl relativ zur Drehzahl des zweiten Getriebeanschlusses erfolgt, indem sich der in der Nut der Kulissenscheibe geführte Pin relativ zu dieser um einen Winkel verdreht, und abhängig von der Größe der Winkeldrehung zwei bezüglich Öffnen und Schließen entgegengesetzt wirkende Kupplungseinheiten K1 und K2 einer Kupplung betätigt, die ein Umschalten von einer Übersetzungsstufe zur anderen ermöglichen.

Durch das erfindungsgemäße Getriebe kann vorteilhaft mittels des erfindungsgemäßen Verfahrens eine gezielte Einstellung der möglichen Übersetzungsstufen während des Betriebs in einer Antriebseinheit erfolgen. Ferner ergeben sich durch die Anwendung einer Kulissenscheibe als Teil eines Kupplungsbetätigungselements weitere Vorteile, die nachfolgend anhand bevorzugter Ausführungsbeispiele dargestellt sind.

Die Kulissenscheibe wird bevorzugt mit einer radial oder axial verlaufenden Nut versehen, wobei, bezogen auf die Kulissenscheibe, bei axialem Verlauf der Pin in einer axialen Richtung in die Nut eingreift, bzw. bei radialem Verlauf der Pin in radialer Richtung in die Nut eingreift. Damit ergibt sich vorteilhaft die Möglichkeit, das Eingreifen des Pins der Konstruktion des Planetengetriebes so anzupassen, dass dabei kompakte Bauformen beibehalten werden können.

Dabei kann, je nach Anordnung der Kulissenscheibe innerhalb des Getriebes, z. B. am Hohlrad, dem Sonnenrad oder dem Steg, aus Raumgründen die eine oder die andere Form bevorzugt werden.

Vorzugsweise weist die Nut links- und rechtsseitige Anschlagpunkte auf, um den Drehwinkel zwischen Pin und Kulissenscheibe bei links- und rechtsseitiger Relativdrehung an diesen zu begrenzen. Diese definierte Relativdrehung kann dabei vorteilhaft zur Schaltung des Getriebeübersetzungsverhäftnisses von einer Stufe in eine andere verwendet werden. Da der Pin innerhalb der Nut an zwei definierten Stellen einmal links und einmal rechts an der Kulissenscheibe anliegt, lassen sich links- und rechtsdrehende Momente mittels der Kombination Pin-Kulissenscheibe übertragen.

In einer weiteren vorzugsweisen Ausführungsform weist die Kulisse vor wenigstens einem Anschlagpunkt der Nut einen etwa keilförmigen Rücksprung innerhalb der Nut auf, wobei die erhöhte Seite des Rücksprungs zum Pin hin und in Richtung des Anschlagpunkts weist. Damit wird sichergestellt, dass ein durch den Pin über eine erste Bahn der Nut einmal erreichter Anschlagpunkt nicht wieder auf der gleichen Bahn verlassen werden kann. Der Pin kann also den Anschlagpunkt nur auf einer anderen Bahn der Nut verlassen. Damit lassen sich vorteilhaft Nuten innerhalb einer Schaltkulisse erzeugen, die mittels des Pins z. B. nur in eine Richtung durchlaufen werden können. Mit einem Rücksprung oder mehreren Rücksprüngen kann somit alleine mittels relativer Verdrehungen von Pin und Kulissenscheibe eine bestimmte Schaltsequenz des Getriebes erreicht werden, ähnlich wie mit einer Logikschaltung. Ferner kann der Rücksprung so ausgebildet sein, dass er zwischen Kulissenscheibe und Pin ein Drehmoment übertragen kann, z. B., wenn der Pin am hohen Ende des Rücksprungs in einem Nutabschnitt anliegt, der von der reinen Radialrichtung abweicht. Ferner kann die Nut selbst einen Rücksprung aufweisen, indem sie an einem Anlagepunkt einen spitzen Winkel keiner als 90° bildet.

Bei der Verwendung von Rücksprüngen weist die Nut vorteilhaft eine in sich geschlossene Struktur auf, sodass der Pin einen Punkt innerhalb der Nut nach Durchlaufen der gesamten Nut, oder eines Teils der Nut, wieder zum selben Punkt gelangt. Dadurch kann jeder Punkt und damit auch jeder Anschlagpunkt innerhalb der Nut beliebig oft erreicht werden, wodurch die mit einer Nutposition verbundenen Schaft- oder Steuerfunktionen beliebig oft ausführbar sind.

In einer weiteren vorzugsweisen Ausführungsform weist die Kulissenscheibe mehrere etwa zum Kulissenmittelpunkt konzentrisch oder axial nebeneinander liegende Nutabschnitte auf, welche untereinander wenigstens einmal miteinander durch eine Nut verbunden sind. Damit ergeben sich insbesondere bei geschlossenen Nuten eine Vielzahl von Steuermöglichkeiten; insbesondere kann erreicht werden, dass die relative Verdrehung von Kulissenscheibe und Pin größer als eine Umdrehung sein muss, um von einem Schaltzustand, z. B. von einem Anschlagpunkt, zu einem zweiten zu kommen. Ferner können die links- und rechtseitigen Anschlagpunkte symmetrisch angeordnet sein.

Vorzugsweise werden die Nuten kreisabschnittsförmig auf einer vorzugsweise runden Kulissenscheibe angeordnet, wobei sich ihr Radius auf einer vorgegebenen Winkeldistanz ändert. Damit eröffnet sich vorteilhaft die Möglichkeit, dass der in der Nut geführte Pin beim Durchlaufen der Nut Steuerfunktionen ausführen kann, die nicht nur von seiner Winkelposition, sondern auch von seiner Radialposition auf der Kulissenscheibe abhängen, wodurch die Steuermöglichkeiten erweitert werden.

In einer weiteren vorzugsweisen Ausführungsform der Erfindung ist an wenigstens einer Stelle der Nut auf der Kulissenscheibe eine Fliehkraftsperre angebracht, die in die Nut eingreift, wenn eine bestimmte Drehzahl der Kulissenscheibe über- oder unterschritten wird. Damit wird der Pin durch die Fliehkraftsperre in seiner Bewegung innerhalb der Nut eingeschränkt. Vorzugsweise wird die Fliehkraftsperre in der Nähe eines Anschlagspunkts angeordnet, um bei einer bestimmten Drehzahl oder einem Drehzahlbereich den Pin zwischen Anschlagpunkt und Fliehkraftsperre zu halten. Damit kann der in der Kulissenscheibe geführt Pin neben winkel- und radiusabhängige auch drehzahlabhängige Steuerfunktionen übernehmen.

Vorteilhaft können die Nuten in einer Stirnseite einer Riemenscheibe angebracht sind, die z. B. um das Planetengetriebe angeordnet ist, wobei dann diese Stirnseite auch als Kulissenscheibe dient, in die ein Pin zu Steuerungszwecken eingreift. Damit lässt sich die Kulissenscheibe als eigenständiges Bauteil einsparen. Ferner kann eine eigenständige Kulissenscheibe auch mit dem Hohlrad oder mit einer anderen rotierbaren Komponente (Steg, Sonnenrad, Riemenscheibe) des Planetengetriebes verbunden sein.

Das Kupplungsbetätigungselement umfasst ferner vorteilhaft ein Gewinde, um eine Winkeldrehung zwischen Pin und Kulissenscheibe in eine axiale Bewegung umzusetzen. Damit kann dann z. B. über geeignete Hebel eine Steuerung z. B. von Kupplungseinheiten erreicht werden. Umfasst das Kupplungsbetätigungselement beispielsweise einen von dem Gewinde in axialer Richtung geführten Kupplungsring, der bei axialer Bewegung die Kupplungseinheiten K1 und K2 öffnet bzw. schließt, die vorzugsweise als Lamellenkupplungen ausgebildet sind, so können auf einfache Weise in einem Planetengetriebe verschiedene Übersetzungen dadurch geschaltet werden, dass durch die relative Verdrehung von Pin und Kulissenscheibe eine Winkelbewegung in eine lineare Kupplungsbewegung umgesetzt wird.

Bei Planetengetrieben ergeben sich mehrere Möglichkeiten, die einzelnen Komponenten als Getriebeanschlüsse zu verwenden. So kann z. B. als erste Komponente zur Ausbildung des ersten Getriebeanschlusses der Steg und als zweite Komponente zur Ausbildung des zweiten Getriebeanschlusses das Sonnenrad oder das Hohlrad dienen, wobei vorteilhaft an der ersten Komponente ein Verbrennungsmotor und an der zweiten ein Startergenerator angeschlossen wird.

Ferner kann das Planetengetriebe zwischen dem Gehäuse und der Riemenscheibe ein Ratschenmechanismus umfassen, mit einem Rampring zum Verbinden des Gehäuses mit dem Hohlrad, und/oder es kann wenigstens zwei radiale Teilstücke aufweisen und der Pin kann mit einem mittels eines elastischen Elements vorgespannten Fliehgewicht verbunden sein, wobei der Pin durch das Fliehgewicht drehzahlabhängig in den radialen Teilstücken der Nut geführt ist.

Beim erfindungsgemäßen Verfahren greift vorzugsweise am ersten Getriebeanschluss ein Verbrennungsmotor an, wobei z. B. das Planentengetriebe auf der Kurbelwelle des Verbrennungsmotors angeordnet wird. Als drehzahlsteuerbare Antriebseinheit wird vorzugsweise ein Startergenerator verwendet. In einer solchen Antriebseinheit kann nun vorteilhaft das erfindungsgemäße Planetengetriebe mittels des Startergenerators gezielt geschaltet werden, z. B. lassen sich die Übersetzungsverhältnisse des Getriebes entsprechend den Erfordernissen schalten. Dies erfolgt dann z. B. durch Änderung der Drehzahl des Startergenerators, um den Pin an einem Anschlagpunkt der Nut zur Anlage zu bringen, der sich dadurch auszeichnet, dass bei gleich bleibender Drehzahländerung eine relative Winkeländerung zwischen Pin und Kulissenscheibe begrenzt wird, wodurch die Kulissenscheibe beschleunigt oder verzögert bzw. ein Drehmomentübertrag zwischen Pin und Kulissenscheibe erfolgt. Damit lässt sich einerseits gezielt ein Übersetzungsverhältnis des Getriebes einstellen und andererseits über die Kulisse und den Pin eine Drehmomentübertragung erzielen.

Vorzugsweise wird beim erfindungsgemäßen Planetengetriebe und beim erfindungsgemäßen Verfahren die Winkeldrehung zwischen Pin und Kulissenscheibe mittels eines Gewindes in eine zur Winkeldrehung proportionale axiale Bewegung zum Öffnen oder Schließen der Kupplungseinheiten K1 oder K2 umgesetzt. Bevorzugt wird eine relative Winkeldrehung von ca. 340° bzw. ca. 700° zum Öffnen und Schießen der Kupplungseinheiten K1 oder K2, wobei die Nut im Winkelabstand von ca. 340° links- und rechtsseitige Anschlagpunkte zur Drehmomentübertragung zwischen Pin und Kulissenscheibe aufweist. Ferner kann eine durch gezielte Drehzahlsteuerung des Startergenerators bewirkende Winkeldrehung von Pin und Kulissenscheibe etwa in die Winkelmitte der links- und rechtsseitigen Anschlagpunkte die beide Kupplungseinheiten K1 und K2 öffnen, sodass eine Neutral- oder Leerlaufstellung erreicht, bei der, bis auf Schleppmomente der Kupplungen, kein wesentlicher Drehmomentübertrag zwischen den Getriebeanschlüssen erfolgt.

Eine bevorzugte Ausführungsform des erfindungsgemäßen Verfahrens ist es, dass bei nicht rotierendem ersten Getriebeanschluss durch wiederholte Drehrichtungsumkehr der drehzahlsteuerbaren Antriebseinheit die Kulissenscheibe und der Pin am rotierenden Getriebeanschluss mit dem Gehäuse verbunden wird.

In einer weiteren bevorzugten Verfahrensform wird durch Betätigen einer in einen Nutabschnitt eingreifenden Fliehkraftsperre beim Überschreiten einer Drehzahl, die relative Verdrehung von Kulissenscheibe und Pin begrenzt.

In einem weiteren bevorzugten Verfahren wird durch eine Radialbewegung des mit einem Fliehgewicht verbundenen Pins entlang eines radial verlaufenden Nutabschnitts eine Unterbrechung eines Drehmomentübertrags vom ersten auf den zweiten Getriebeanschluss erzielt, wobei das Fliehgewicht mittels eines elastischen Elements vorgespannt ist.

Die Erfindung wird anhand der Zeichnung näher erläutert, wobei in den Figuren gleiche oder vergleichbar wirkende Teile mit den gleichen Bezugszeichen bezeichnet sind. Dabei zeigen:
- Figur 1: eine Schnittdarstellung eines ersten Ausführungsbeispiels des erfindungsgemäßen Planetengetriebes,
- Figur 2: eine Draufsicht einer Ausführungsform einer Kulissenscheibe für ein erfindungsgemäßes Planetengetriebe,
- Figur 2a: eine schematische Darstellung eines axialen Rücksprungs im Schnitt durch eine Nut,
- Figur 3: eine Kulissenscheibe mit Fliehkraftsperre,
- Figur 4: eine vereinfachte lineare Darstellung des Getriebes aus Figur 1,
- Figur 5: das Zustandsdiagramm für das Getriebe aus Figur 1,
- Figur 6: eine in die Stirnseite einer Riemenscheibe eingearbeitete Kulisse,
- Figur 7: das Zustandsdiagramm für die Kulisse aus Figur 6,
- Figur 8: eine weitere Kulissenscheibe,
- Figuren 9, 10, 11, 12 und 13: weitere Ausführungsbeispiele von Planetengetrieben,
- Figur 14: eine Ausführungsform eines Planetengetriebes mit Klauenkupplungen,
- Figur 15: ein Schnitt einer Vorderansicht eines weiteren Ausführungsbeispiels eines Planetengetriebes,
- Figur 16: eine Seitenansicht des Getriebes aus Figur 15 im Schnitt, und
- Figur 17: eine vergrößerte Teilansicht von Figur 15.

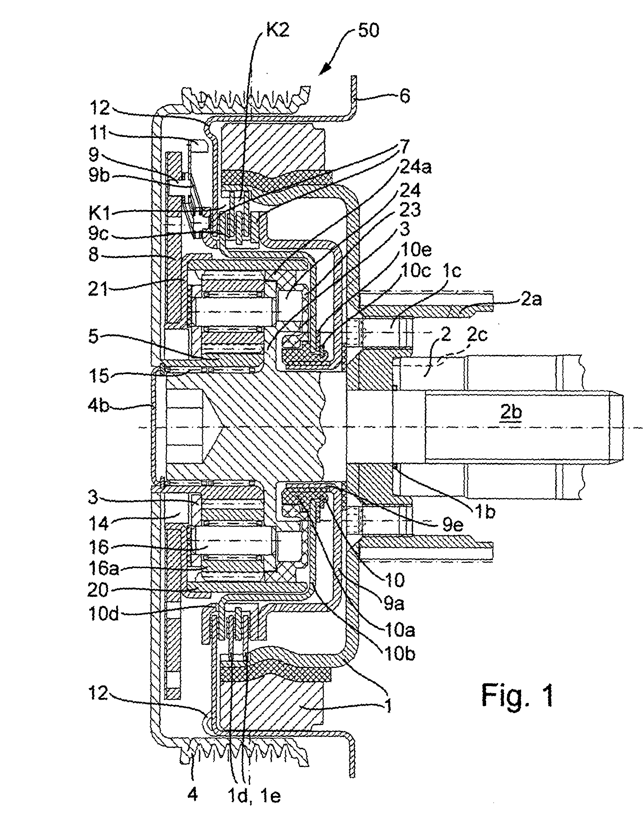

Figur 1 zeigt ein Planetengetriebe 50 mit dem erfindungsgemäßen Schaltmechanismus. Auf einer Welle 2, z. B. einer Kurbelwelle eines Verbrennungsmotors, ist stirnseitig ein Ketten-, bzw. Zahnriemenrad 2a zum Antreiben der Nockenwellen mittels einer Wellenschraube 2b befestigt. Die Befestigung erfolgt beispielsweise mittels einer reibschlüssigen Verbindung zwischen dem Rad 2a und der Stirnseite der Welle 2, durch Festdrehen der Wellenschraube 2b. Ein Keil 2c dient zur Winkelausrichtung von Rad 2a und Welle 2. Ferner kann zwischen Rad 2a und Welle 2 ein Sicherungsring 1 b eingesetzt sein. Am Rad 2a ist ferner mittels Schrauben 1c ein Tilger 1 fixiert, der mit der Welle 2 fest verbunden ist und bei Rotation der Welle 2 mit dieser umläuft. Auf der Wellenschraube 2b werden zusätzlich wesentliche Teile des Planetengetriebes 50 drehbar gelagert bzw. sind fest an dieser ausgebildet.

In einem vorderen Bereich der Wellenschraube 2b ist ein Steg 3 des Planetengetriebes fest mit dieser ausgebildet. Der Steg 3 umfasst Achsen 16, auf denen Planetenräder 16a drehbar gelagert sind. Die Zähne der Planetenräder 16a greifen in einen inneren Zahnkranz 19 eines Hohlrads 20 ein. Über einen Verbindungssteg 21 ist eine Kulisse 8, die einen ersten wesentlichen Teil der erfindungsgemäßen Schaltvorrichtung bildet, fest mit dem Hohlrad 20 verbunden, wobei zwischen dem Verbindungssteg 21 und dem Steg 3 an der Stirnseite der Achsen 16 zur Einstellung des axialen Spiels der Planetenräder 16a und zur Reduzierung der Reibung ein Axiallager 17 angebracht ist. Das Axiallager 17 ist vorzugsweise ein Reibring, der z. B. aus Kunststoff bestehen kann.

Ebenfalls in einem vorderen Bereich der Wellenschraube 2b, vor dem Steg 3, ist ein Sonnenrad 5 des Planetengetriebes 50 auf dieser drehbar gelagert. Die Lagerung erfolgt z. B. mittels Nadellager, vorzugsweise Nadelhülsen 15, wobei auch eine andere Lagerung gewählt werden kann. Am Sonnenrad 5 ist an dessen außenseitiger Stirnseite die Riemenscheibe 4 z. B. mittels einer Schweißung fest verbunden. Mittels einer Riemenscheibe 4 ist die Welle 2 mit dem Startergenerator (nicht dargestellt) über einen Riemen verbindbar, wobei weitere Aggregate wie z. B. eine Klimaanlage angetrieben werden können. Die Wellenschraube 2b wird stirnseitig mit einer z. B. an der Riemenscheibe 4 angebrachten Abdeckung 4b abgedeckt.

Zwischen dem Steg 3 und einem Tilger 1 befindet sich eine Hohlwelle 9e, die einen zweiten wesentlichen Teil der erfindungsgemäßen Schaltvorrichtung bildet. Diese ist ebenfalls drehbar auf der Wellenschraube 2b gelagert, wobei sie eine Pinverbindung 9a umfasst, um eine feste Verbindung mit einem in einer Nut der Kulissenscheibe 8 eingreifenden Pin 9 zu haltern. Die Hohlwelle 9e ist axial lediglich im Rahmen eines minimalen Lagerspiels beweglich, welches ebenfalls mittels eines Axiallagers 25 einstellbar ist. Das Axiallager 25 kann ebenfalls als Reibscheibe ausgebildet sein. Ferner umfasst die Hohlwelle 9e ein Außengewinde 10, auf dem eine Mutter 10a drehbar angeordnet ist. Die Mutter 10a wird über eine Hohlradverbindung 23 mit dem Hohlrad 20 so verbunden, dass sich die Mutter 10a relativ zum Hohlrad 20 durch Drehung auf der Hohlwelle 9e axial verschieben lässt, wobei zwischen Mutter 10a und Hohlrad 20 stets eine drehschlüssige Verbindung existieren soll. Dies kann z. B. dadurch erzielt werden, dass eine Verzahnung im Außenbereich der Hohlradverbindung 23 in den Zahnkranz 19 des Hohlrads eingreift, und eine entsprechende axiale Verzahnung im Inneren der Hohlradverbindung 23 in eine zu dieser komplementären Verzahnung auf der Mutteraußenseite eingreift. Damit wird zwischen dem Hohlrad 20 und der Mutter 10a eine Verbindung geschaffen, sodass wenn sich die Hohlwelle 9e und das Hohlrad 20 relativ zueinander um einen Winkel verdrehen, die Drehung in einem winkelgleichen Drehen der Mutter 10a auf der Hohlwelle 9e resultiert. Da die Hohlwelle 9e in axialer Richtung (bis auf etwaiges Lagerspiel) nicht beweglich ist, wird die Mutter 10a mittels des Gewindes 10 in Axialrichtung verschoben. Diese Axialverschiebung kann zum Schalten des erfindungsgemäßen Planetengetriebes 50 ausgenutzt werden, wobei das Schalten durch eine relative Winkelbewegung zwischen Hohlwelle 9e und Hohlrad 20 gesteuert werden kann. Die Hohlradverbindung 23 überträgt beim Verdrehen der Mutter das hierfür erforderliche Drehmoment (Steuermoment). Da dieses Moment klein ist, kann die Hohlradverbindung 23 aus Kunststoff gefertigt werden. Ein Sicherungsring 22 fixiert die Hohlradverbindung 23 axial am Hohlrad 20.

Zum Schalten des Getriebes 50 ist an der Mutter 10a drehbar gelagert ein Kupplungsring 10b angebracht. Im Ausführungsbeispiel wird dieser axial durch einen an der Mutter 10a angeformten Vorsprung und durch einen dem Vorsprung gegenüberliegenden auf der Mutter 10a aufgebrachten Sicherungsring 10c fixiert. Dabei wird z. B. mittels einer Reibscheibe 10e oder einem anderen Lagerelement zur Axiallagerung und Lagerspieleinstellung dieses eingestellt Der Kupplungsring 10b lässt sich um die Mutter 10a relativ zu dieser drehen, wobei er allerdings in axialer Richtung, aufgrund der axialen Fixierung mit der Mutter, mit dieser bewegt wird. Radiale Teile 10d des Kupplungsrings 10b bilden Anpressplatten eines ersten Teils einer Kupplung 7, die hier als Lamellenkupplung ausgebildet ist. Ferner führt die Pinverbindung 9a, an der in axialer Richtung ein Durchgriffselement 9c angeschweißt ist, mittels des Durchgriffselements 9c durch eine am Kupplungsring 10b radial angeordnete Öffnung. Es können auch mehrere derartige Durchgriffselemente und Öffnungen (z. B. in sternförmiger Anordnung) vorgesehen sein. Durch diese Durchgriffselemente 9c und die Pinverbindung 9a ist die Hohlwelle 9e rotationsschlüssig mit dem Kupplungsring 10b verbunden, das heißt, ein relatives Verdrehen der Hohlwelle 9e zum Kupplungsring 10b wird unterbunden. An einem Durchgriffselement 9c ist mittels elastischer Elemente, wie z. B. Blattfedern 9b, der Pin 9 befestigt, der neben seiner Funktion als Schaltelement, zur Schaltung des Getriebes 50, auch die Drehmomentübertragung zwischen Riemenscheibe 4 und Welle 2 bewirkt. Der zweite Teil der Kupplung 7 wird durch am Tilger 1 angebrachte, radial nach innen weisende Anpressplatten 1d und 1e gebildet. Die Kupplung 7 umfasst daher zwei Kupplungseinheiten K1 und K2, wobei die Kupplungseinheit K1 z. B. reibschlüssig geschlossen wird, indem die dem feststehenden Gehäuse 6 zugewandten radialen Teile 10d des Kupplungsrings 10b am Gehäuse 6 zur Anlage gebracht werden.

Die Kupplungseinheit K2 wird dadurch geschlossen, dass der Kupplungsring 10b mit seinen radialen Teilen 10d an den am Tilger 1 befindlichen Anpressplatten 1a und 1b zur Anlage gebracht wird.

Wird eine Kupplungseinheit geschlossen, so ist die andere Kupplung geöffnet. Dabei erfolgt das Schalten der Kupplungseinheiten K1 und K2, wie erwähnt, mittels der Axialverschiebung des Kupplungsrings 10b, der einer entsprechenden Axialverschiebung der Mutter 10a folgt, wenn sich Hohlrad 20 und Hohlwelle 9e in ausreichendem Maß relativ zueinander verdrehen, das heißt, Kupplungsring 10b wird relativ zur axial fixierten Hohlwelle 9e und damit zur Pinverbindung 9a verschoben.

Dichtelemente 14, 24 und 24a dichten den in Öl oder Fett laufenden Planetensatz ab.

Im gezeigten Ausführungsbeispiel ist die Kulissenschaltung, die aus Kulissenscheibe 8, Pin 9, Blattfedern 9b, Pinverbindung 9a, Hohlwelle 9b, Mutter 10a, Gewinde 10, Kupplungsring 10b und Durchgriffselement 9c besteht, zwischen Antrieb und Abtrieb so angeordnet, dass sie auch den entsprechenden Kraftschluss sicherstellt, das heißt über Teile (im Wesentlichen über Kulissenscheibe 8, Pin 9, Durchgriffselement 9c und Teile des Kupplungsrings 10b) der Kulissenschaltung werden die Drehmomente von der Welle 2 auf die Riemenscheibe 4 übertragen oder umgekehrt.

Im gezeigten Beispiel ergeben sich zwei unterschiedliche Getriebeübersetzungen: Im ersten Fall, wenn die linke Kupplung K1, die das Hohlrad 20 mit einem Gehäuse 6 verbindet, geschlossen ist, ergibt sich eine Übersetzung von 3:1 von der Welle 2 auf die Riemenscheibe 4. Diese Übersetzung wird z. B. beim Starten eines Verbrennungsmotors mit der Welle 2 gewählt. Im zweiten Fall, wenn K1 offen ist, und die rechte Kupplungseinheit K2 geschlossen ist, ergibt sich eine Übersetzung von 1:1. Dabei wird mittels der Kupplungseinrichtung K2 das Hohlrad 20 mit dem Steg verbunden. Das Umschalten der Kupplungen K1 und K2 erfolgt über die Kulissenschaltung dadurch, dass mittels des Startergenerators durch gezieltes Einstellen seiner Drehzahl relativ zur Drehzahl der Riemenscheibe eine relative Winkelverdrehung zwischen Pin 9 und Kulissenscheibe 8 erzielt wird, die dann über Pin 9, Blattfedern 9b, Durchgriffselement 9c, Pinverbindung 9d auf die Hohlwelle 9e übertragen wird. Ebenso wird der Kupplungsring 10b entsprechend verdreht, da dieser rotationsschlüssig mittels der Durchgreifelemente 9c mit dem Pin 9 verbunden ist. Mit Hilfe der Hohlradverbindung 23, die die Mutter 10a rotativ fest mit dem Hohlrad verbindet, ergibt sich eine Drehung der Mutter 10a auf dem Gewinde 10 der Hohlwelle 9e. Dadurch wird der Kupplungsring 10b axial verschoben und kann die Kupplungseinheiten K1 und K2 öffnen bzw. schließen.

In der Anordnung von Figur 1 sind die Kupplungseinheiten so angeordnet, dass immer nur eine Kupplung geschlossen werden kann, die andere ist dann geöffnet. Die relative Winkelverdrehung zwischen Pin und Kulissenscheibe wird durch Anschlagpunkte in der Kulissenscheibe begrenzt, sodass ein Verdrehen von ca. 340° möglich ist. Dies ist gleichzeitig die maximale Verdrehung des Gewindes 10 und damit der Bewegung der radialen Teile 10d des Kupplungsrings, die als Anpressplatten wirken und am Außenumfang des Kupplungsrings 10b angebracht sind. Vorteilhaft ist bei der in Figur 1 dargestellten Ausführungsform das Gewinde 10 weit innen angeordnet, um ein möglichst geringes Reibmoment des Gewindes bei hoher Axialkraft erzeugen zu können. Ferner ergibt sich durch die Möglichkeit der gezielten Drehzahlsteuerung des Startergenerators neben dem eigentlichen Schalten der Kupplungseinrichtungen K1 und K2 zusätzlich, dass bei einer Winkelverstellung von Pin 9 und Kulissenscheibe 8 von etwa 340°/2 beide Kupplungseinrichtungen K1 und K2 bis auf ein kleines Schleppmoment zur Überwindung der Gewindereibung des Gewindes 10 geöffnet sind.

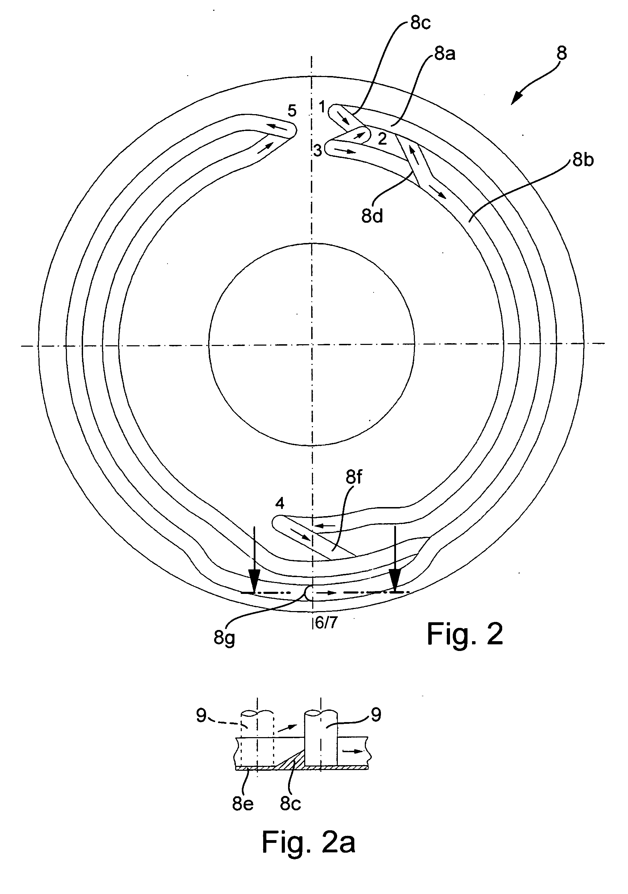

In Figur 2 wird nun genauer auf die Funktion des Schaltmechanismus mittels der Kulissenscheibe eingegangen. Die Kulissenscheibe 8 umfasst eine vorzugsweise in sich geschlossene Nut 8a. Dabei können Nutabschnitte, wie im Ausführungsbeispiel gezeigt, abschnittsweise nahezu konzentrisch zueinander angeordnet sein. In der Nut wird der Pin 9 bei einer Verdrehung von Nut und Pin geführt. Überträgt z. B. der Verbrennungsmotor über das Getriebe Leistung auf die Riemenscheibe 4, so liegt der Pin 9 an der Stelle 1 der Kulisse an, und das Drehmoment wird an diesem Anschlagpunkt übertragen. Die Kulisse 8 dreht sich dabei im Uhrzeigersinn und nimmt den Pin sozusagen mit. Für das in Figur 1 dargestellte Getriebe ergibt sich hier eine Übersetzung von 1:1, es wird also Leistung von der Kurbelwelle auf den Startergenerator übertragen, der als Generator arbeitet. Der Startergenerator wird also angetrieben, weshalb ein solcher Zustand auch kurz als "Zug 1:1" bezeichnet wird. Die Nutform in Figur 2 erlaubt in Stellung 2 auf der Kulisse 8 einen Boosterbetrieb, das heißt, es werden Leistung und Drehmoment vom Startergenerator auf die Kulisse übertragen. Dazu wird der Startergenerator als Motor mit einer etwas höheren Drehzahl angesteuert, als er aufgrund des "Zug 1:1"-Betriebs hätte. Der Pin entfernt sich von dem auch als Stelle 1 bezeichneten Anschlagpunkt und wird durch die Nut in einen, in Kulissendrehrichtung verdrehten, Anschlagpunkt 2 gedreht, über den er, nach Anlage, Drehmoment auf den Verbrennungsmotor oder die Welle 2 überträgt. Dieser Zustand wird als "Schub 1:1" bezeichnet, da der Startergenerator ein positives Drehmoment M⁺ aufbringt. Dabei ist der Anschlagpunkt 2 nur so weit vom Anschlagpunkt 1 entfernt, dass durch diese Verdrehung von Kulisse und Pin die Kupplungseinheiten im Wesentlichen ihre Stellungen beibehalten. Dies bedeutet, dass die Drehbewegung des Pins 9 und damit die der Mutter 10a, die in einer Axialbewegung des Kupplungsrings 10b resultiert, nicht ausreicht, um die geschlossene Kupplungseinheit zu öffnen bzw. die geöffnete Einheit zu schließen. Durch Drehzahlrücknahme am Startergenerator bzw. durch Beschleunigung des Verbrennungsmotors relativ zum Startergenerator wird der Pin 9 wieder in die andere Richtung gedreht und kommt - geführt durch die Nut (und einen Rücksprung 8c, siehe unten) - in die Kulissenposition 3. Hier ist wieder der Zustand "Zug 1:1" gegeben, da Position 3 winkelgleich zur Kulissenposition 1 ist, und somit keine Verstellung der Kupplungseinrichtung erfolgt.

Bei der in Figur 2 dargestellten Kulissenscheibe ist in der Nähe jedes Anschlagpunkts ein axialer Rücksprung 8c angeordnet, der in Figur 2a schematisch dargestellt ist. Der Rücksprung 8c ist derart keilförmig ausgebildet und greift in die Nut 8a ein, sodass ein Pin 9 die Nut 8a nur in einer Richtung passieren kann, da er anderenfalls an einem steilen Ende, welches vorzugsweise senkrecht zur Nut 8a ausgebildet ist, zur Anlage kommt. Dabei kann der Keil 8c eine Art Anschlagspunkt für den Pin bilden, wenn dieser in der Nut etwa in Drehrichtung angeordnet ist. Der Rücksprung 8c wird z. B. mittels einer Platte 8e auf der gegenüberliegenden Seite des Pineingriffs angebracht. Dabei kann der Rücksprung federnd an der Platte 8e oder an der Kulissenscheibe 8 gehalten werden oder mit dieser fest verbunden sein. Im zweiten Falle wird die Pinverschiebung (senkrecht zur Nut) aufgrund des Rücksprungs durch einen federnd gehaltenen Pin 9 ausgeglichen, z. B. mittels Blattfedern 9b, wie dies in Figur 1 dargestellt ist.

Die Rücksprünge 8c dienen im Wesentlichen zur Führung des Pins 9. So wird z. B. sichergestellt, dass der Pin nach Verlassen eines Anschlagpunkts definiert weitergeführt wird, wobei bei geschlossenen Kulissenbahnen derselbe Anschlagpunkt erst wieder nach einem Durchlauf der Nut 8a erreicht wird. In Figur 2 sind die Rücksprünge 8c mittels Linien 8d gekennzeichnet.

Soll ein Umschalten des Getriebes von z. B. 1:1 (K2 geschlossen) auf 3:1 (K1 geschlossen) erfolgen, so muss der Pin 9 z. B. aus der Schaltstellung 3 auf der Kulisse 8 in Drehrichtung der Kulisse mittels des Startergenerators beschleunigt werden. In der dargestellten Kulisse (Figur 2) erreicht der Pin 9 nach einer Verdrehung von etwa einer halben Umdrehung einen Anschlagpunkt 4. Der Anschlagpunkt 4 ist wieder mittels eines axialen Rücksprungs 8c gegen ein Zurückdrehen des Pins 9 gesichert. Da sich im Anschlagpunkt 4 Pin 9 und Kulisse 8 etwa um eine halbe Umdrehung verdrehen, dreht sich auch Mutter 10a auf dem Gewinde 10 mit, wodurch der Kupplungsring 10b axial verschoben wird und Kupplungseinheit K2 öffnet. Dabei reicht die Verschiebung des Kupplungsrings nicht aus, um die Kupplungseinrichtung K1 zu schließen. Damit sind beide Kupplungseinrichtungen geöffnet. Die Schaltstellung 4 wird beibehalten, bis der Startergenerator die um das Übersetzungsverhältnis z. B. 3:1 höhere Drehzahl erreicht hat. Dies ist erforderlich, da sich das Gewinde 10 nun am Schleppmoment der Kupplung K1 abstützen muss. Um eine weitere Verdrehung zwischen Pin und Kulisse in die gleiche Richtung zu erzielen, muss die Startergeneratordrehzahl um den Übersetzungsfaktor des Getriebes erhöht werden. Im Drehzahlbereich zwischen der Drehzahl der Welle 2 und der um die Getriebeübersetzung erhöhten Drehzahl bleiben beide Kupplungseinheiten K1 und K2 geöffnet, das heißt, die Welle 2 ist von der Riemenscheibe 4 getrennt.

Ein Übersetzungswechsel kann nicht nur durch Beschleunigen des Startergenerators sondern auch durch starkes Verzögern der Welle 2 erzwungen werden, da sich auch hier eine entsprechende Verdrehung von Pin 9 und Kulisse 8 ergeben. Dies ist z. B. der Fall, wenn ein mit einer oben beschriebenen Antriebseinheit ausgestatteter Kraftwagen eine starke Bremsung mit eingelegtem Gang durchführt (z. B. bei einer ABS-Bremsung) oder bei einer Ganghochschaltung. Dies würde im Nebenabtrieb zu unerwünscht hohen Bremsbeschleunigungen führen und zu einer möglichen Überlastung der Bauteile. Um dies zu Verhindern wird in der Nut 8a der Kulissenscheibe 8 der Zustand der geöffneten Kupplungen so lange beibehalten, bis der Bremsvorgang beendet ist. In der in Figur 2 dargestellten Kulisse 8 wird dies durch einen Rücksprung 8f in der Nut 8a erreicht, der in Richtung entgegen der Richtung der Kulissendrehung im Zustand "Zug 1:1" weist. Dadurch muss der Startergenerator erst seine Drehzahl etwas reduzieren, um die Schaltstellung 4 der Kulisse wieder zu verlassen. Danach kann der Startergenerator entweder in den Schaltzustand 3 oder in den Schaltzustand 5 fahren. Durch den Rücksprung 8f ist somit sichergestellt, dass bei schneller Motorbremsung (Bremsung der Welle 2) der Zustand der geöffneten Kupplungen nur durch gezielte Generatoransteuerung verlassen werden kann. Alternativ kann derselbe Effekt mit einer drehzahlabhängigen Fliehkraftsperre erzielt werden, die in einen Nutbereich der Kulissenbahn eingreifen kann, dessen Nutabschnitt zur Schaltstellung mit hohem Übersetzungsverhältnis (3:1) führt und diesen Nutbereich erst ab einer unkritischen Drehzahl freigibt.

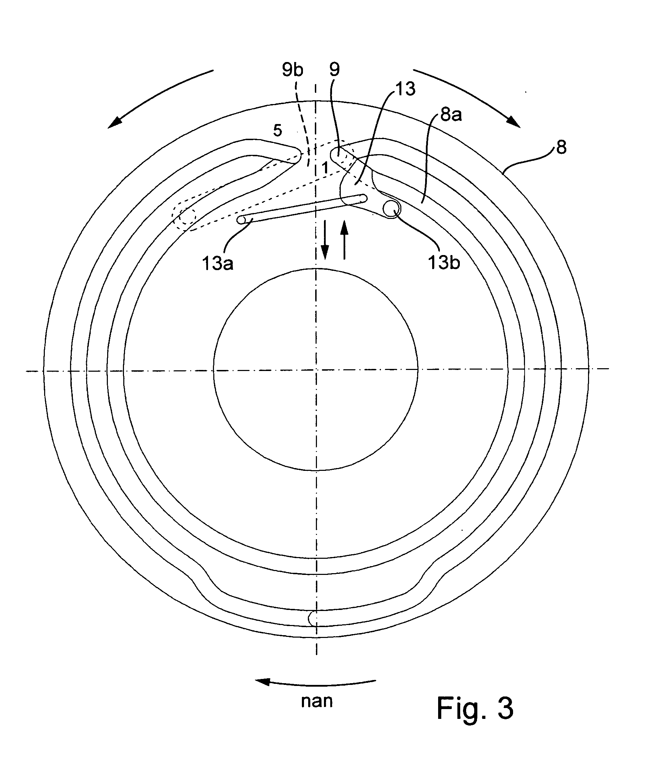

Ein Beispiel einer Ausführungsform einer Kulisse mit Fliehkraftsperre ist in Figur 3 dargestellt. Dabei greift eine Fliehkraftsperre 13 in einen Bereich der Nut 8a bei hoher Drehzahl ein und versperrt dem Pin 9 ein Verdrehen in Richtung der Schaltstellung 5 der hohen Übersetzungsstufe. Die Fliehkraftsperre ist an einem Ende drehbar mittels eines Lagers 13b an der Kulissenscheibe 8 befestigt und mit einer Feder 13a radial nach innen vorgespannt, sodass sie bei kleinen Drehzahlen nicht zur Wirkung kommt. Erst bei höheren Drehzahlen, wenn die Fliehkraft ausreichend hoch ist, dreht sich die Fliehkraftsperre in die Nut 8a. Dadurch kann z. B. ein Umschalten von der niederen in die hohe Übersetzungsstufe bei hohen Drehzahlen verhindert werden. Zusätzlich ergibt sich die Möglichkeit, bei hohen Drehzahlen, das heißt bei Drehzahlen, bei der die Fliehkraftsperre in die Nut eingreift, mit der niederen Getriebeübersetzung das Getriebe im Boosterbetrieb zu betreiben, das heißt, der Startergenerator unterstützt den Verbrennungsmotor, indem er zusätzliches Drehmoment bereitstellt. Dabei kommt der Pin 9 an der Fliehkraftsperre 13 zur Anlage.

Wird nun der Pin 9 durch den Startergenerator in die Schaltstellung 5 der in Figur 2 dargestellten Kulisse 8 gedreht, so schließt Kupplungseinheit K1, wodurch z. B. ein Starten des Verbrennungsmotors oder ein Boosterbetrieb bei kleinen Drehzahlen möglich ist. Auf einen Rücksprung der Nut in Richtung der Kulissendrehung, welcher einen Zug des Generators mit hoher Übersetzung "Zug 3:1" zur Folge hätte, wurde verzichtet. Der Generator würde dann im Hochbetrieb (und etwaige Nebenaggregate wie Klimaanlage und Servopumpe) betrieben. Gewünscht ist aber, dass auch bei schneller Beschleunigung des Verbrennungsmotors der Generator und die Nebenaggregate mit einer sofortigen Übersetzung von 1:1 betrieben werden, wie sich dies in Schaftstellung 1 auf der Kulisse ergibt. Denn bei schneller Beschleunigung des Verbrennungsmotors kann der Generator kein Schubmoment mehr erzeugen und würde so in der Stellung 3:1 im Rücksprung während des Hochbeschleunigens des Verbrennungsmotors verbleiben, wodurch ein Überdrehen möglicher Nebenaggregate riskiert wird. Beim Hochdrehen des Verbrennungsmotors (Welle 2) werden die Kupplungseinheiten K1 und K2 geöffnet, dies entspricht der Stellung 6 auf der Kulissenscheibe, wobei dann die Riemenscheibe noch etwa um die Getriebeübersetzung (3:1) schneller dreht als die Welle 2. Erst wenn beide Drehzahlen von Riemenscheibe 4 und Welle 2 etwa gleich sind, wird die Kupplung für die Übersetzung i=1:1 geschlossen.

Ferner ist in der Schaltstellung 6/7 auf der Kulisse in Figur 2, bei der beide Kupplungseinheiten geöffnet sind, ein axialer Rücksprung 8g angebracht. Damit kann bei stehendem Verbrennungsmotor (Welle 2) in dieser Position, wenn beide Kupplungen geöffnet sind, durch den Startergenerator z. B. ein an der Riemenscheibe befindliches Nebenaggregat, z. B. eine Klmaanlage, betrieben werden (Schaltstellung 7). Dabei wird lediglich das Schleppmoment der Kupplung bzw. Teile davon, auf die Welle 2 übertragen, wobei der Generator in diesem Betriebszustand nachteilig dieses Schleppmoment aufbringen muss, wodurch sich der Wirkungsgrad beim Antrieb des Nebenaggregats verschlechtert. Um das Schleppmoment zu minimieren, können die Kupplungen ohne Momentenüberdeckung ausgelegt werden. In diesem Fall muss das erforderliche Schleppmoment zur Abstützung der Hohlwelle 9e bzw. der Mutter 10a durch eine zusätzliche Reibeinrichtung aufgebracht werden. Damit kann das Schleppmoment besser gesteuert werden. Als Reibeinrichtung kann z. B. ein Federblech 11 (siehe Figur 1) dienen. Um das Schleppmoment als Funktion der Drehrichtung zu steuern, kann das Federblech 11 z. B. radial etwas verschoben werden, indem sich der Pin etwas in radialer Richtung verschiebt, um dann an einer Art Ratschenstruktur 12 am Gehäuse zur Anlage zu kommen. Die radiale Verschiebung des Pins wird über die Nut 8a dadurch erreicht, dass diese sich dem Kulissenrand nähert. Die Rateschenstruktur ist so gestaltet, dass beim Antrieb der Nebenaggregate bei geöffneten Kupplungseinheiten K1 und K2 in Richtung positiver Drehrichtung des Generators (Antriebsrichtung der Nebenaggregate) nur ein kleines Schleppmoment erzeugt wird, wodurch der Startergenerator durch das Planetengetriebe wenig belastet wird. In der anderen Richtung dagegen ist das Schleppmoment höher, um die Reibung im Gewinde 10 besser überwinden zu können, wodurch ein Schalten erst ermöglicht wird.

Ein besonderer Vorteil der in Figur 1 dargestellten Ausführungsform ist, dass nur das Planetengetriebe in Ölschmierung läuft, nicht jedoch die anderen Bauteile, insbesondere nicht die Kupplung und die Kulissenschaltung. Damit kann die Ölmenge gering gehalten werden. Die Kupplungen arbeiten außerdem mit dem hohen Trockenreibwert, wodurch die erforderlichen Anpresskräfte kleiner sind. Zusätzlich sind die Schleppverluste geringer, als die die bei Kupplungen in einem Ölbad auftreten. Ferner können die Radialwellendichtungen 24 und 14 zur Dichtung des Planetensatzes weit innen angebracht werden, wodurch sich geringere Schleppmomente im Planetensatz ergibt und damit ein besserer Wirkungsgrad.

Weitere Vorteile ergeben sich aus der Nabe der in Figur 1 dargestellten Ausführungsform, wobei das Planetengetriebe auf einfache Weise mittels der Wellenschraube 2b, mit dem daran angeformten Innensechskant auf die Welle 2 geschraubt wird. Dabei werden auf der Wellenschraube der Planetenträger und die Riemenscheibe gelagert und bilden ein Bauteil.

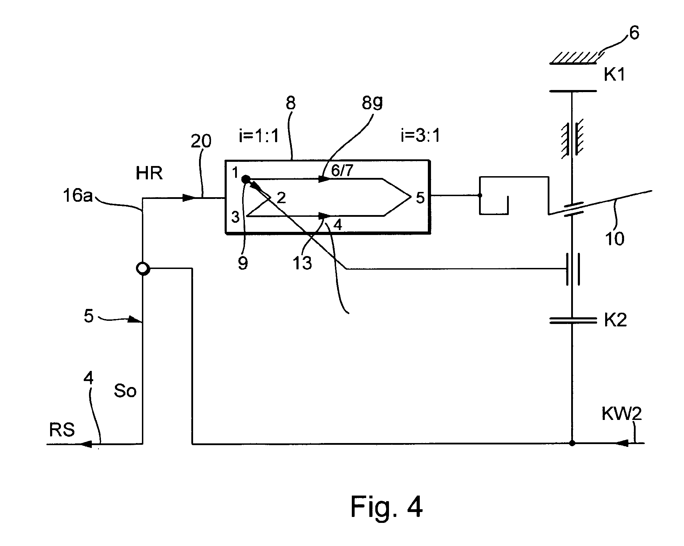

Figur 4 zeigt eine vereinfachte lineare Darstellung des erfindungsgemäßen Planetengetriebes aus Figur 1. Dabei ist der Drehmomentübertrag von der Kurbelwelle 2 (KW) auf die Riemenscheibe 4 (RS) dargestellt. Ebenso sind die Kupplungen K1 und K2 dargestellt, die mittels des Gewindes 10 beim Schalten des Getriebes verschoben werden. Das Drehmoment wird von der Welle 2 zuerst auf den Steg 3 übertragen. Am Steg 3 wird ein Teil des Drehmoments mittels der Planetenräder 16a auf das Hohlrad 20 und ein Teil auf das Sonnenrad 5 übertragen, entsprechend der zugehörigen Übersetzungsverhältnisse. Am Hohlrad 20 ist die Kulissenscheibe 8 befestigt, in die der Pin 9 eingreift. Die Kulisse 8 entspricht etwa der in Figur 2 dargestellten. Wird der Pin 9 beispielsweise von Schaltstellung 1 der Kulisse 8 nach Schaltstellung 5 bewegt, so schließt K1 und K2 öffnet. Dies kann linear durch ein Verschieben der Kupplungseinheiten entlang der Steigung 10 (Gewinde) dargestellt werden. Ebenfalls dargestellt in der Kulisse ist der axiale Rücksprung 8g in der Schaltstellung 6/7. Zusätzlich ist die Schaltstellung 4 dargestellt, jedoch ohne den in der Kulissenscheibe aus Figur 2 enthaltenden Rücksprung der Nut, weshalb hier zur Sicherung der Nebenaggregate eine Fliehkraftsperre 13 symbolisiert ist. Diese kann analog zu der in Figur 3 dargestellten ausgebildet sein.

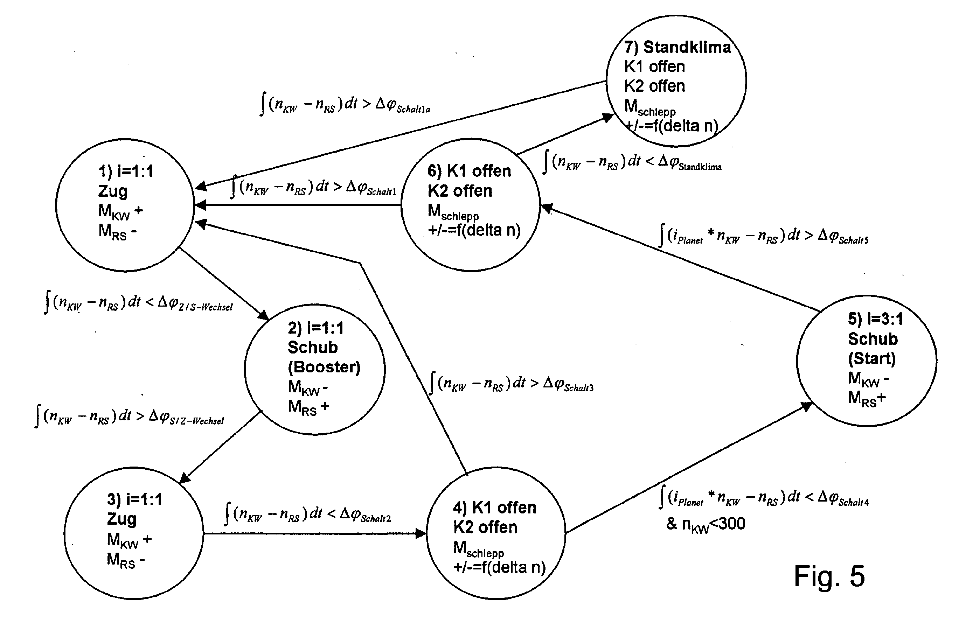

Figur 5 zeigt ein Zustandsdiagramm, welches die verschiedenen Schaltzustände des Planetengetriebes aus Figur 1 mit der Kulissenscheibe aus Figur 2 zeigt. Dabei geben die Nummern in den Kreisen die entsprechenden Schaltzustände der Kulisse an. M_{KW} bzw. M_{RS} sind die entsprechenden Drehmomente an der Kurbelwelle 2 und der Riemenscheibe 4, wobei "+" eine Zunahme und "-" eine Abnahme des Moments bedeutet. M_{Schlepp} bezeichnet das Schleppmoment der Kupplung, welches positiv "+" oder negativ "-" sein kann und eine Funktion der Drehzahl ist ( f(delta n) ). Der Verstellwinkel zwischen Pin 9 und Kulissenscheibe 8 wird allgemein mit Dj bezeichnet und ergibt sich aus der zeitlich integrierten Drehzahldifferenz von Kurbelwelle 2 und Riemenscheibe 4 (nKW und nRS), wenn die Getriebeübersetzung 1:1 ist, anderenfalls muss das Getriebeübersetzungsverhältnis (iPlanet) berücksichtigt werden. Die in Figur 5 angegebenen Dj sind die erforderlichen Winkelverdrehungen, um die entsprechenden Schaltzustände auf der Kulissenscheibe 8 zu erreichen. Das Zustandsdiagram verdeutlicht, dass die Zustände, aufgrund der axialen Rücksprünge nur in einer Richtung durchlaufen werden können, wobei sich im Schaltzustand 4 zwei mögliche Pfade ergeben. Wird der Startergenerator langsamer als die Welle 2, so führt der Nutbereich 8b (Figur 2) zur Schaltstellung 1 auf der Kulissenscheibe. Dreht der Startergenerator in einem Drehzahlbereich zwischen der Drehzahl der Riemenscheibe nRS und der mit der Getriebeübersetzung iPlanet multiplizierten Wellendrehzahl iPlanet *nKW so kann, wie oben bereits ausgeführt, die höhere Getriebeübersetzung nicht eingestellt werden, das heißt, die Riemenscheibe muss sich annähernd mit der um die Getriebeübersetzung multiplizierten Wellendrehzahl drehen, um die in Figur 5 angegebene Integralbeziehung hinsichtlich des Schaltwinkels Dj_{schalt4} erfüllen zu können, damit Schaltzustand 5 erreicht wird. Zusätzlich kann mittels eine Fliehkraftsperre (n_{KW} < 300) ein Umschalten in die hohe Übersetzungsstufe bei zu hohen Wellendrehzahlen verhindert werden. Im Schaltzustand 6 ergeben sich aufgrund des axialen Rücksprungs ebenfalls zwei Zustände, die mittels des Startergenerators bei Erfüllung der angegebenen Integralbeziehungen bezüglich der Winkeldifferenzen angesteuert werden können.

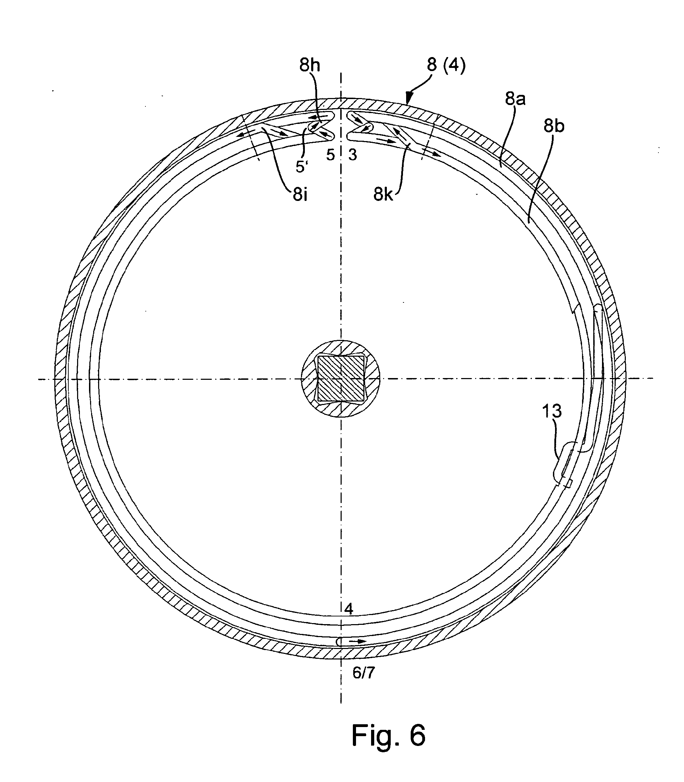

Figur 6 zeigt eine weitere Kulissenscheibe für ein erfindungsgemäßes Getriebe. Im Unterschied zu der in Figur 2 dargestellten Kulisse ist kein Rücksprung in der Nut bei der Schatstellung 4 vorgesehen, weshalb eine Fliehkraftsperre 13 in dem Nutabschnitt 8b angebracht ist, der von der niederen Übersetzung auf die hohe Übersetzung des Getriebes schaltet. Die Fliehkraftsperre 13 blockiert die Nut 8b bei hohen Drehzahlen, sodass ein Hochschalten der Übersetzung nicht möglich ist. Eine Besonderheit dieser Kulissenscheibe ist, dass sie Teil der Stirnseite der Riemenscheibe 4 ist, wobei die Nut 8a in die Riemenscheibenstirnseite eingearbeitet sind. Ferner umfasst die Kulisse einen zusätzlichen Rücksprung 8h in der Nut 8a, wodurch es möglich ist, einen Generatorhochbetrieb zu schalten (Schaltstellung 5'), das heißt der Startergenerator und die Nebenaggregate werden mit 3:1 bzw. mit der Getriebeübersetzung angetrieben ("Schub 3:1"). Die Nutabschnitte 8i und 8k dienen dazu, die äußeren Schaltpositionen 1 und 5 schneller zu erreichen, ohne die gesamte Nut durchfahren zu müssen. Damit kann z. B. von "Zug 1:1" in Schaftstellung 3 auf "Schub 1:1" in Schaftstellung 2 schneller umgeschaltet werden, ohne dabei die Kupplungseinheiten zu öffnen. Ebenso kann von "Schub 3:1" in der äußeren Schaltstellung 5 ohne Öffnen der Kupplungseinheiten in den "Zug 3:1" geschaltet werden."

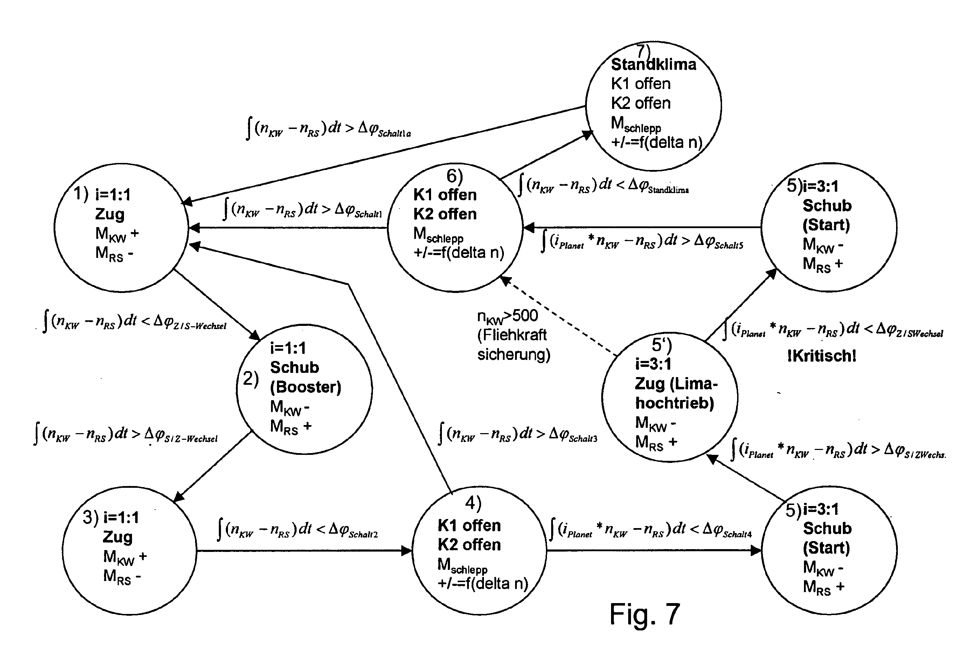

Figur 7 zeigt das zu Figur 6 zugehörige Zustandsdiagramm analog wie Figur 5. Wie erwähnt gibt es durch den Rücksprung 8h einen neuen Schaltzustand 5', bei dem der Startergenerator im Hochbetrieb betrieben wird. Aufgrund des Schaltzustands 5' ergibt sich ein weiterer Schaftzustand 5 (außen), bei dem ein "Schub 3:1" möglich ist, das heißt, bei dem der Startergenerator die Welle 2 antreibt. Alternativ zum Rücksprung 8h kann eine Fliehkraftsperre verwendet werden, die bei Wellendrehzahlen kleiner 500 U/min in die Nut eingreift und der Pin an ihr zur Anlage kommt, wodurch ein "Schub 3:1 "-Betrieb geschaltet ist. Übersteigt die Wellendrehzahl eine kritische Drehzahl, so öffnet die Fliehkraftsicherung die Nut und es erfolgt ein Umschalten der Übersetzung von z. B. 3:1 auf 1:1, wodurch die Nebenaggregate vor Überdrehzahl geschützt werden.

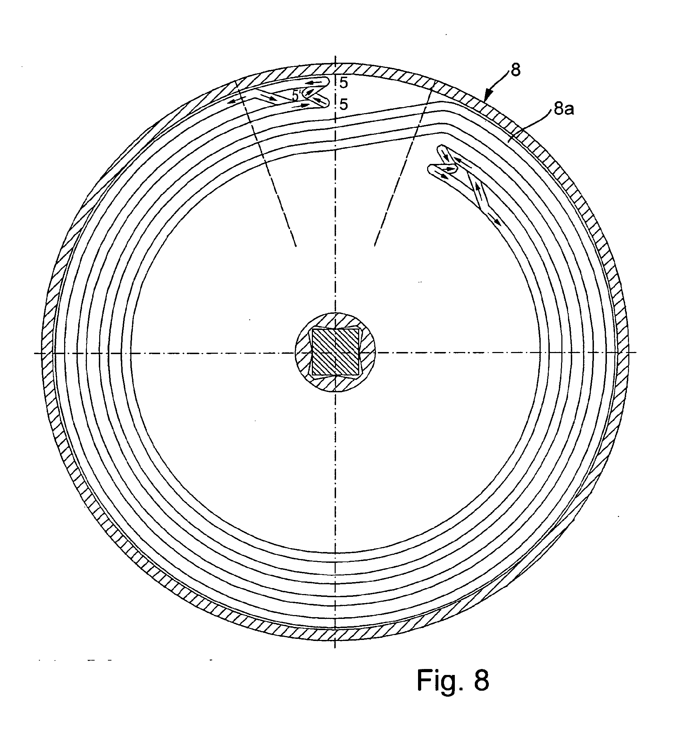

In Figur 8 ist eine zu Figur 6 analoge Kulissenscheibe 8 mit den gleichen Schaltzuständen jedoch ohne Fliehkraftsperre dargestellt, die aber ebenfalls anbringbar ist. Der Unterschied zur Kulisse aus Figur 6 besteht darin, dass eine Verdrehung von ca. 700° zwischen Pin 9 und Kulissenscheibe 8 notwenig ist, um zwischen den Kupplungseinheiten K1 und K2 umzuschalten. Dadurch kann bei gleicher Gewindesteigung des Gewindes 10 der Kupplungsring einen doppelt so großen Axialweg zurücklegen. Allerdings ist diese Lösung nachteilig mit einem höheren Reibungsverschleiß an Pin 9 und Nut 8a verbunden.

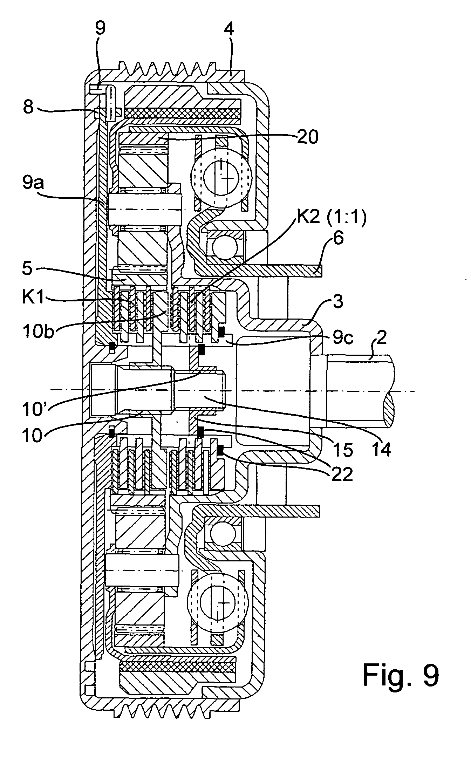

Figur 9 zeigt ein weiteres Ausführungsbeispiel des erfindungsgemäßen Getriebes, bei dem das Hohlrad 20 permanent mit dem feststehenden Gehäuse 6 verbunden ist. Die Welle 2 (Kurbelwelle) ist fest mit dem Steg 3 verbunden. Für die hohe Getriebeübersetzung (3:1) wird der Steg 3 mit der Sonne 5 verbunden, und bei der niederen Übersetzung (1:1) wird die Riemenscheibe 4 direkt mit dem Steg 3 verbunden. Die Vorteile dieser Ausführungsform sind durch die weit innen liegenden Kupplungseinheiten und das innen liegende Gewinde gegeben, wodurch sich kleine Reibmomente erzielen lassen. Nachteilig ist jedoch, dass bei der kleinen Übersetzung (1: 1) die Planeten leer umlaufen, wodurch Reibungsverluste entstehen. In dieser Ausführungsform ist die Kulisse 8, in die der Pin 9 eingreift, in die Stirnfläche der Riemenscheibe 4 eingearbeitet. Der Pin 9 wird über eine federnd ausgebildete Pinverbindung 9a gehalten, die an einem Durchgriffselement 9c angebracht ist, welches (z. B. sternförmig) durch einen Kupplungsring 10b greift, der die Anpressplatte zum Öffnen und Schließen der Kupplungseinheiten K1 und K2 trägt. Das Durchgriffselement 9c ist bezüglich axialer Verschiebung mittels eines Sicherungsrings 22 oder eines entsprechenden Axiallagers gegen eine axiale Verschiebung gesichert, ebenso eine Schraubenhülse 15, die sich auf einer sich im Zentrum des Getriebes befindlichen Schraube 14a befindet. Die Schraube 14a ist axial beweglich und umfasst ein Gewinde 10 und ein Gewinde 10' mit umgekehrter Steigung. Wird der Pin 9 nun gegen die Kulisse 8 verdreht, so dreht sich das Durchgriffselement 9c und damit die zentrale Schraube 14a mittels des Gewindes 10', da sie sich an der Schraubenhülse 15 axial abstützt. Die zentrale Schraube 14a bewegt sich axial und nimmt den Kupplungsring 10b in dieselbe Richtung mit. Da sich der Kupplungsring 10b selbst auf einem Gewinde mit umgekehrter Steigung befindet und rotationsschlüssig mit dem Durchgriffselement 9c verbunden ist, wird dieser um die doppelte axiale Strecke versetzt, als die zentrale Schraube 14a. Damit wird Öffnen und Schließen der Kupplungen K1 und K2 erzielt.

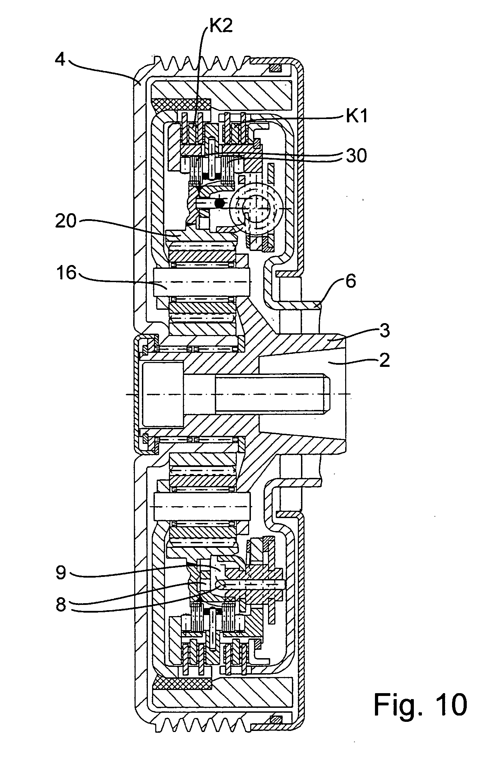

Die Figur 10 zeigt ein weiteres Ausführungsbeispiel eines erfindungsgemäßen Planetengetriebes mit ähnlichem Aufbau wie das in Figur 1 gezeigte. Dabei ist jedoch das Gewinde 10 außen angeordnet und der Pin 9 und die Kulissenscheibe 8 befinden sich in radialer Richtung zwischen den Kupplungseinheiten K1, K2 und dem Hohlrad 20, wobei die Kulisse 8 am Hohlrad 20 und der Pin 9 am Kupplungsträger befestigt ist. Zur Minimierung der Reibmomente wird ein spezielles Federbandgewinde 30 ("Raberfeder") verwendet, das eine spezielle Entwicklung der Anmelderin darstellt und in DE 100 81 936 näher ausgeführt ist. Beim Federbandgewinde 30 ist ein federnder Flachstahl (Federband) schraubenförmig aufgewickelt, wobei seine flache Seite in radialer Richtung angeordnet ist. Bei der Verwendung als Gewinde wird der Federstahl z. B. mittels zweier Rollen auf eine Seite eines Anschlags gerollt. Dadurch wird der Anschlag oder der Rollenhalter bewegt. Der Vorteil besteht in der sehr geringen Reibung beim Bewegen der Feder und damit beim Verstellen des Gewindes, da die Feder mittels Rollen bewegt wird. Mittels dieses Gewindes lassen sich vorteilhaft sehr kleine Steigungen mit hoher Genauigkeit erzielen.

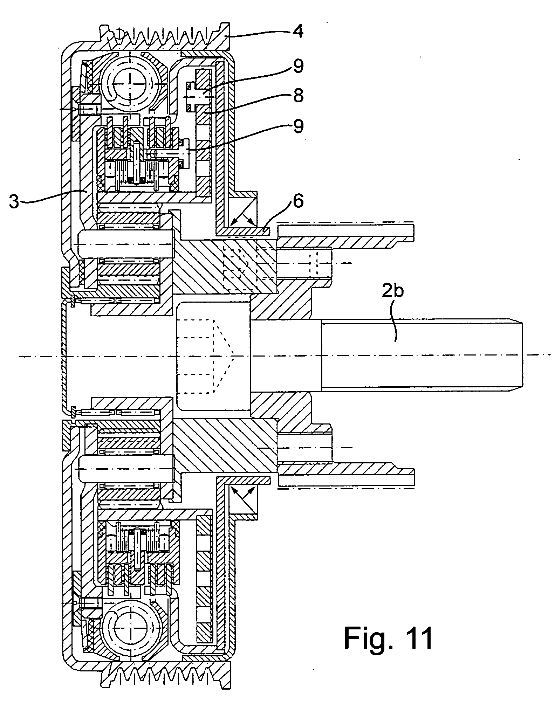

Figur 11 zeigt schematisch eine ähnliche erfindungsgemäße Ausführung wie in Figur 10, wobei die Kupplungen K1, K2 und das Federbandgewinde 30, sowie Kulisse 8 und Pin 9, 9' (9 und 9' sind mit einer nicht dargestellten Blattfeder 9b verbunden) in einer anderen Lage angeordnet sind.

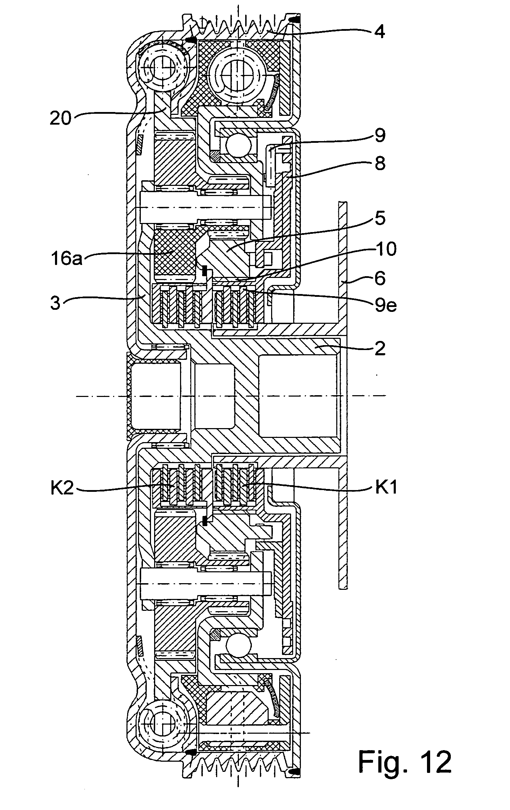

In Figur 12 ist eine weitere Ausführungsform des erfindungsgemäßen Planetengetriebes dargestellt, wobei die Riemenscheibe 4 mit dem Hohlrad 20 und die Kurbelwelle 2 mit dem Steg 3 verbunden ist. Das Sonnenrad 5 wird wahlweise mit dem feststehenden Gehäuse 6 (hohe Übersetzung, z. B. 3:1) oder dem Steg (kleine Übersetzung, z. B. 1:1) verbunden. Ferner wird das Sonnenrad 5 durch drei Stufenplanetenräder 16a zentriert und hat im Inneren ein Gewinde 10 ausgebildet. Die Kulissenscheibe 8 stützt sich am Gehäuse 6 oder am Steg 3 über die Hohlwelle 9e ab, die ein Außengewinde umfasst, welches mit dem Gewinde 10 des Sonnenrads 5 in Wirkverbindung ist. Der Pin 9 ist mit dem Sonnenrad 5 verbunden. Wird der Pin 9 relativ zur Kulisse 8 verschoben, so verdreht sich die Hohlwelle 9e und wird axial verschoben. Durch diese Axialbewegung werden die Kupplungen K1 und K2 entsprechend der vorhergehenden Ausführungsbeispiele verschoben.

Ist das Sonnenrad 5 mit dem Steg 3 verbunden, so läuft der Planetensatz im Block um. Um die erforderliche Übersetzung von 2.5:1 bis 3:1 zu erhalten, muss ein Stufenplanetensatz verwendet werden. Bei dieser Ausführungsform können Stellgewinde 10 und die Kupplungen K1, K2 im Inneren des Planetensatzes angeordnet werden, wobei sich kleine Reibmomente beim Stellgewinde ergeben und im Außenbereich Raum für die Anordnung von Tilger und Schwingungsdämpfer ist.

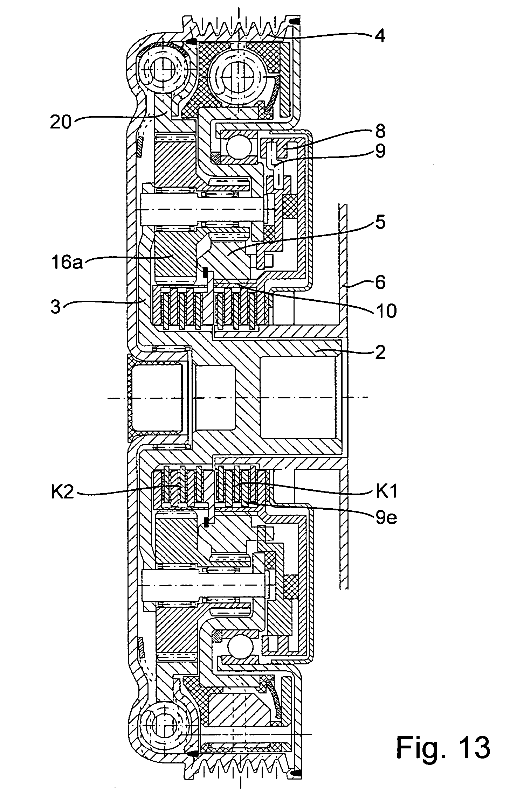

In Figur 13 ist ein weiteres Ausführungsbeispiel eines Getriebes dargestellt, mit ähnlichem Aufbau wie in Figur 12, wobei die Kulissenscheibe eine radial angeordnete Nut aufweist.

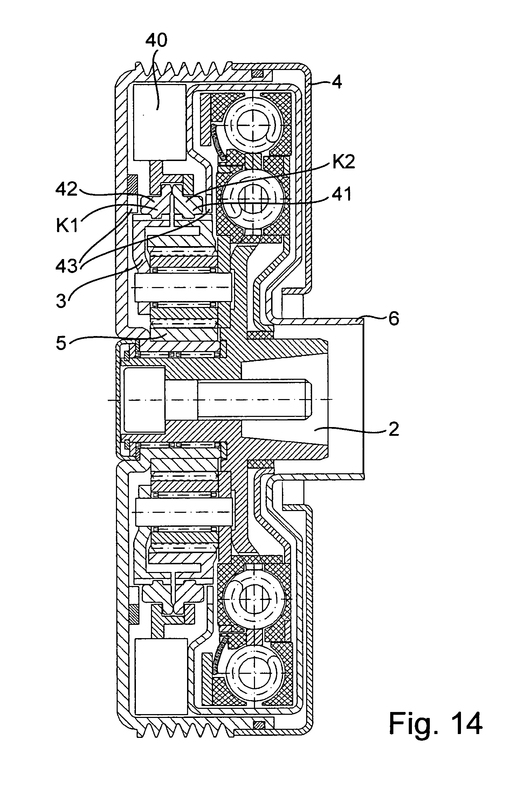

Figur 14 zeigt ein Ausführungsbeispiel eines Planetengetriebes, bei dem die Lamellenkupplungen durch Klauenkupplungen 41, 42 ersetzt sind, wobei die Schaffung der Kupplungen mittels eines Aktors 40 erfolgt, der die Kulissenschaltung ersetzt. Die Verwendung der Klauenkupplungen 41, 42 erfordert, dass mit dem Startergenerator stets die Synchrondrehzahl der jeweiligen Gangstufe angefahren werden kann, um die Klauenkupplungen 41, 42 in die jeweiligen Ausnehmungen 42 schalten zu können. Der Vorteil ist, dass in jedem Schaltzustand beliebig oft geschaltet und damit ein Wechsel von Zug und Schub erzielt werden kann. Ebenfalls vorteilhaft ist, dass bei Motorstillstand (stehender Welle 2) nahezu keine Schleppmomente auftreten, wodurch Nebenaggregate, wie z. B. auftreten, wodurch Nebenaggregate, wie z. B. Klimaanlagen, mit gutem Wirkungsgrad betrieben werden können.

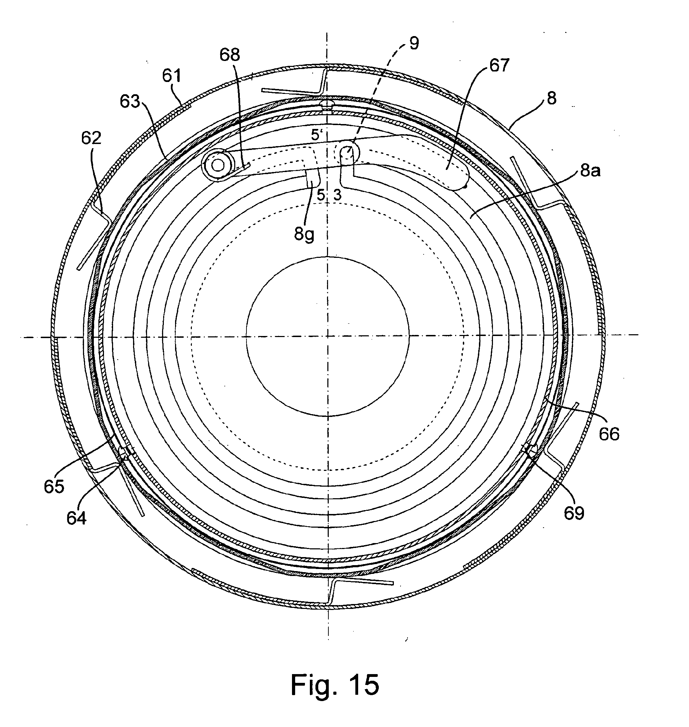

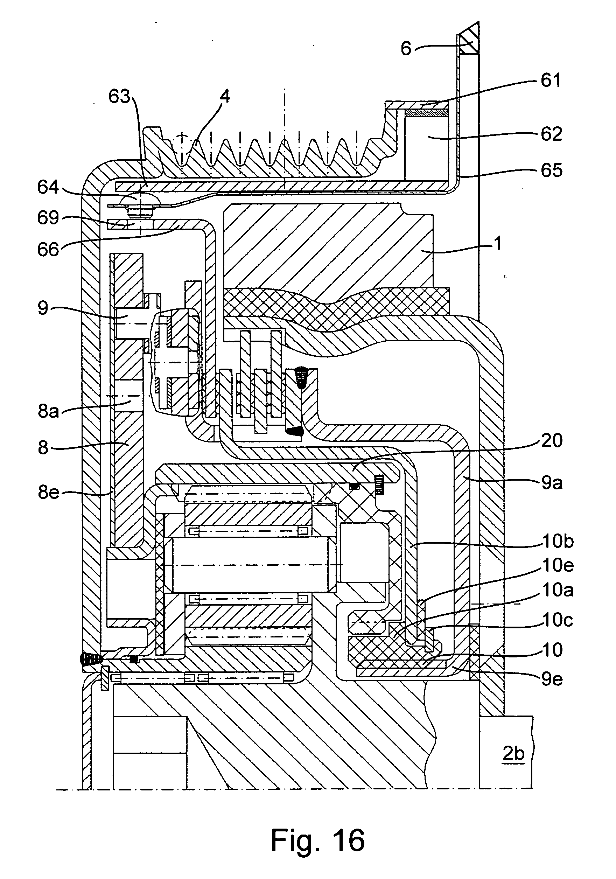

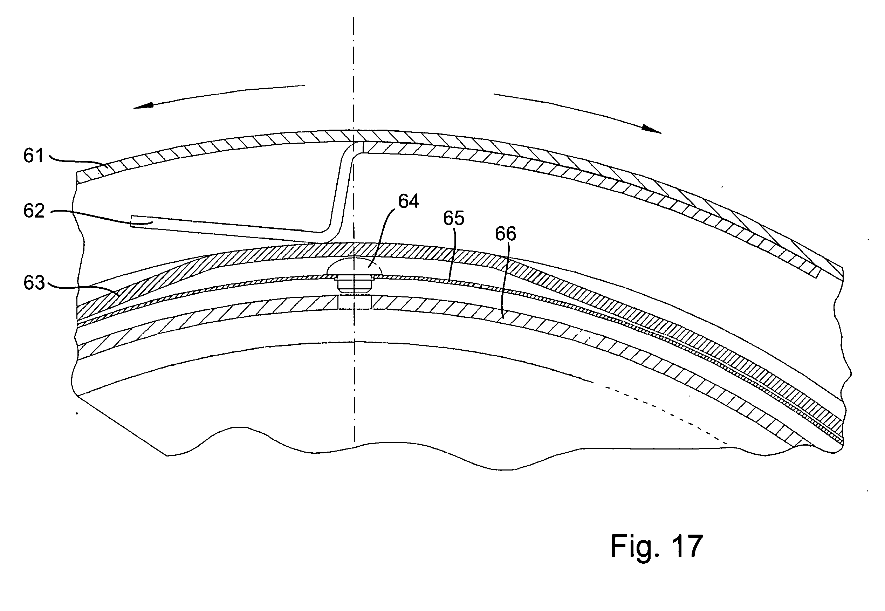

In Figur 16 und 17 ist ein Getriebe dargestellt, in welchem eine Kulissenscheibe 8 aus Figur 15 verwendet wird, wobei Figur 15 insgesamt eine Vorderansicht eines Schnitts aus Figur 16 ist, die ein modifiziertes erfindungsgemäßes Planetengetriebe zeigt. Figur 17 zeigt in einem vergrößerten Ausschnitt die einzelnen Funktionselemente des modifizierten Getriebes. In Figur 15 ist die Kulissenscheibe 8 in einer Schaltstellung für eine Übersetzung von 1:1 dargestellt. Die Kulissenbahn 8a weist an den Schaltpunkten 1,3 und 5, 5' einen radial verlaufenden Nutabschnitt auf. Ist der Pin in diesem Nutabschnitt angelangt, so kann er ihn zunächst nicht verlassen. Er wird formschlüssig mit sehr wenig Spiel durch ein Fliehgewicht 67, mit dem der Pin verbunden ist, in der Nut gehalten. Gegenüber den obigen Ausführungen der Kulissenbahnen ist hier das Spiel sehr viel geringer ausgebildet, wodurch der Pin innerhalb der Nutbegrenzungen bei einem Zug-/Schubwechsel (einer Umkehrung des aktuell anliegenden Drehmoments) nur wenig bewegt wird. Dadurch ergibt sich eine geringere Geräuschentwicklung. Ferner können im Trieb auftretende Schwingungen keine ungewollten Gangwechsel hervorrufen. Weiterhin kann in einer Schaftstellung ohne Eingriff des Startergenerators beliebig oft zwischen Zug/Schub gewechselt werden.

Ein Umschalten der Getriebeübersetzung (Gangwechsel) erfolgt immer beim Überschreiten bzw. Unterschreiten einer Grenzdrehzahl, bei der der Pin 9 von innen nach außen oder umgekehrt entlang des radial ausgebildeten Nutabschnitts wandert. Die Störungen des Umschaltvorgangs durch am Pin von übertragenen Momenten verursachten Reibkräfte, werden durch die ständig vorhandenen Schwingungen reduziert, da diese einen Anlagewechsel des Pins hervorrufen, wodurch immer für kurze Zeit geringe Reibkräfte vorherrschen. Zu diesem Zeitpunkt kann der Pin 9 dann bei zunehmender Fliehkraft nach außen bzw. bei abnehmender Fliehkraft nach innen wandern. Bei kleiner Drehzahl bzw. bei stehender Welle kann der Pin durch den Startergenerator von der Übersetzung 1:1 in eine höhere (z. B. 3:1) geschaltet werden, da er sich nun auf dem inneren Nutabschnitt befindet. Dabei erfolgt der Schaltvorgang z. B., wie in den oben beschriebenen Ausführungsbeispielen, durch relative Verdrehung von Pin und Kulissenscheibe durch eine geregelte Drehzahl des Startergenerators. Ist dann die hohe Übersetzung, z. B. 3:1 eingelegt, so kann das Getriebe durch den Startergenerator nicht mehr zurückschalten, da der Pin 9 durch den radial verlaufenden Nutabschnitt begrenzt wird, bzw. durch einen axialen Rücksprung 8g. Erst, wenn die Drehzahl eine Grenzdrehzahl, die durch das Fliehgewicht 67 und seine Rückstellfeder bestimmt ist, erreicht, kann der Pin 9 durch die Fliehkraft nach außen gelangen, wo er durch Drehzahlsteuerung des Startergenerators wieder in die niedere Übersetzungsstufe schaltbar ist. Bei Erreichen der Grenzdrehzahl und damit der Schubstellung 5', kann kein Zug auf den Startergenerator ausgeübt werden, sodass kein Generatorbetrieb von 3:1 möglich ist (dies gilt für alle Nebenaggregate), wodurch eine von äußeren Einflüssen (Stellgrößen) unabhängige Sicherheitsfunktion gegeben ist. Ist die niedere Drehzahlstufe erreicht, so kann die hohe Übersetzung erst wieder bei Unterschreitung der Grenzdrehzahl durch geeignete Startergeneratordrehzahl erreicht werden, da erst dann der Pin 9 nach innen wandern kann, auf den Nutabschnitt, der zur hohen Übersetzung führt.

Bei der eben beschriebenen Ausgestaltung der Nut ist bei Stillstand der Welle keine beliebig wiederholbare Schaltung der Kupplungseinheiten möglich, da das Fliehkraftgewicht nach etwa einem Nutdurchlauf stets innen verbleibt, wobei der Pin sich "festläuft", das heißt in der Schaltstellung 5 verharrt. Dadurch kann nachteilig bei stehender Kurbelwelle kein Nebenaggregat, wie eine Klimaanlage, betrieben werden, da nicht beide Kupplungseinheiten geöffnet sind. Um diese dennoch betreiben zu können, wird die Kulissenscheibe weiter modfiziert. Ferner erfolgt eine Modifikation der Riemenscheibe und des Gehäuses.

Figur 16 zeigt ein analoges Planetengetriebe zu dem in Figur 1, jedoch mit modifizierter Kulissenscheibe und zusätzlichen Verbindungs- und Steuerelementen am Gehäuse und an der Riemenscheibe. Dabei sind gleiche Teile gleich bezeichnet. Im Planetengetriebe nach Figur 16 wird bei stehender Wellenschraube 2b das Hohlrad 20 vom Gehäuse getrennt, damit dieses frei durchdrehbar ist. Dabei erfolgt das Lösen und Verbinden des Hohlrads 20 mit dem Gehäuse mittels eines Trägerrings 66 und Stiften 64, die in Ausnehmungen 69 in den Trägerring 66 eingreifen können. Die Stifte 64 werden hierfür radial beweglich an einem Ring 65 aus Federblech angebracht, wobei dieses zur Verbesserung der radialen Beweglichkeit der Stifte 64 in deren Umgebung Aussparungen aufweisen kann, damit eine federblattartige Halterung der Stifte erzielt wird. Der Ring 65 dient gleichzeitig zur Abstützung des Drehmoments und ist mit dem Gehäuse 6 verbunden. Das Verbinden und Lösen der Stifte 64 mit dem Trägerring 66 erfolgt mittels eines relativ zum Federblechring 65 drehbaren Ramprings 63. Eine Verdrehung des Ramprings 63 um jeweils 30° verbindet und löst dabei eine Verbindung zwischen Federblechring 65 und Trägerring 66. Der Rampring ist wenigstens teilweise federnd ausgebildet, da die Stifte 64 und die Ausnehmungen 69 am Trägering 66 nicht immer synchron stehen, wodurch der Stift bei Bedarf vorgespannt, und dann mittels des Startergenerators die richtige Winkelposition angefahren werden kann. Um einen Aktor zur Steuerung des Ramprings 63 einzusparen, wird dieser gezielt durch den Generator verdreht. Dafür wird um den Rampring 63 ein Freilaufblech 62 angeordnet, welches an der Riemenscheibe 4 mittels eines Rings 61 befestigt ist, und mit dieser rotiert. Femer wird die Tatsache ausgenutzt, dass sich die Riemenscheibe 4 im Betrieb gegenüber dem Gehäuse immer nur rechts (Betriebsrichtung) bewegt, womit eine Drehung in die andere Richtung zum Schalten benutzt werden kann. Das Freilaufblech 62 umfasst federnd ausgebildete keilförmige Elemente, die je nach Drehrichtung der Riemenscheibe 4 mit unterschiedlichen Winkeln am Rampring 63 zur Anlage kommen. Dadurch wird ein "Ratschenmechanismus" erzielt, mittels dessen der Rampring 63 übergangen oder verdreht werden kann. Dreht die Riemenscheibe 4 in Betriebsrichtung, so wird der Rampring 63 übergangen und behält seine Position relativ zum Federring bei. Dreht die Riemenscheibe 4 in die andere Richtung, so wird der Rampring mitgenommen und die Stifte 64 können mit den Ausnehmungen 69 des Trägerblechs verbunden werden, wodurch eine Verbindung zwischen Hohlrad 20 und Gehäuse 6 hergestellt wird. Bei höheren Drehzahlen in Betriebsrichtung wird die Reibung zwischen Freilaufblech und Rampring dadurch verringert, dass die keilförmigen Elemente des Freilaufblechs 62 sich durch die Fliehkraft nach außen vom Rampring 63 wegbewegen. Dies erhöht den Wirkungsgrad im Normalbetrieb.

Durch das in den Figur 15, 16 und 17 beschriebene Getriebe ergeben sich mehrere Vorteile. Durch die Verwendung der speziellen Kulisse mit radialen Nutbereichen und einem an einem Fliehgewicht angeordneten Pin ergeben sich weniger drehzahlkritische Zustände des Getriebes hinsichtlich einer unbeabsichtigten Gangumschaltung, da die Drehzahl selbst eine Randbedingung für ein Schatten vorgibt. Dadurch kann beim Erreichen kritischer Drehzahlen ein zwangsweises, drehzahlabhängiges Schalten erreicht werden. Durch die Trennung der Verbindung zwischen Hohlrad und Gehäuse bei stehender Welle des Verbrennungsmotors, können die Kupplungen mit höherer Drehmomentüberdeckung dimensionieren werden, wodurch kürzere Schaltwege realisierbar sind. Ferner kann ein Zustand beliebig oft geschaltet werden, auch bei stehender Welle. Es wird insgesamt eine umfassende Sicherheit gegen zu hohe Materialbelastung durch Drehzahlüberhöhungen erzielt. Die vorgeschlagene drehzahlabhängige Gangumschaltung kann als Sicherheitsfunktion bei allen Startergeneratorgetrieben mit freier Gangwahl durch einen Aktor angewandt werden.

Mit den oben beschriebenen Ausführungsformen der Planetengetriebe lassen sich vorteilhaft fünf Funktionen bzw. Schaltzustände mittels gezielter Ansteuerung eines Startergenerators im Nebenabtrieb erfüllen.

Es ist ein Zugbetrieb mit einer niedrigen Übersetzung (1:1) und einer hohen Übersetzung (z. B. 3:1) möglich. Ebenso mit denselben Übersetzungsverhältnissen ein Schubbetrieb bei der ein Startergenerator eine Kurbelwelle eines Verbrennungsmotors, z. B. in einem Kfz antreibt. Ferner können Nebenaggregate wie eine Klimaanlage bei stehender Kurbelwelle durch den Startergenerator betrieben werden.

Es sind weitere erfindungsgemäße Ausführungsformen von Getrieben möglich, welche ebenfalls obige Funktionen erfüllen und eine Kulissenschaltung verwenden, weshalb die Erfindung nicht auf die gezeigten Ausführungsbeispiele begrenzt sein soll. Ferner können Merkmale einzelner Ausführungsformen mit denen anderer kombiniert oder ausgetauscht werden.

### Bezugszeichenliste

| Pos. | Benennung | Pos. | Benennung | Pos. | Benennung |
|---|---|---|---|---|---|
| 1 | Tilger | 21 | Verbindungssteg | 101 | |
| 1b | Sicherungsring | 22 | Sicherungsring | 102 | |
| 1c | Schrauben | 23 | Hohlradverbindung | 103 | |
| 1d | Anpressplatte | 24 | Dichtelement | 104 | |
| 2 | Welle, Kurbelwelle | 24a | Dichtelement | 105 | |
| 2a | Ketten-, Zahnriemenrad, Rad | 25 | Axiallager | 106 | |
| 2b | Wellenschraube | 30 | Federbandgewinde | 107 | |
| 2c | Keil | 40 | Aktor | 108 | |
| 3 | Steg | 41 | Klauenkupplung | 109 | |
| 4 | Riemenscheibe | 42 | Klauenkupplung | 110 | |
| 4b | Abdeckung | 43 | Ausnehmungen | 111 | |
| 5 | Sonnenrad | 50 | Planetengetriebe | 112 | |
| 6 | Gehäuse | 61 | Ring | 113 | |
| 7 | Kupplung | 62 | Freilaufblech | 114 | |
| 8 | Kulisse, Kulissenscheibe | 63 | Rampring | 115 | |
| 8a | Nut | 64 | Stift | 116 | |
| 8b | Nut, Nutbereich | 65 | Federblechring | 117 | |
| 8c | Rücksprung | 66 | Trägerblech | 118 | |
| 8d | Rücksprung, Linie | 67 | Fliehgewicht | 119 | |
| 8e | Platte | 68 | Rückstellfeder | 120 | |
| 8f | Rücksprung in der Nut | 69 | Ausnehmung | 121 | |
| 8g | axialer Rücksprung | 72 | | 122 | |
| 8i | Nutabschnitte | 73 | | 123 | |
| 8k | Nutabschnitte | 74 | | 124 | |
| 9 | Pin | 75 | | 125 | |
| 9' | Pin | 76 | | 126 | |
| 9a | Pinverbindung | 77 | | 127 | |
| 9b | Blattfedern | 78 | | 128 | |
| 9c | Durchgriffselement | 79 | | 129 | |
| 9e | Hohlwelle | 80 | | 130 | |
| 10 | Gewinde, Außengewinde, Stellgewinde | 81 | | 131 | |
| 10' | Gewinde mit umgekehrter Steigung | 82 | | 132 | |
| 10a | Mutter | 83 | | 133 | |
| 10b | Kupplungsring | 84 | | 134 | |
| 10c | Sicherungsring | 85 | | 135 | |
| 10d | radiale Teile des Kupplungsrings | 86 | | 136 | |
| 10e | Reibscheibe | 87 | | 137 | |
| 11 | Federblech | 88 | | 138 | |
| 12 | Ratschenstruktur | 89 | | 139 | |
| 13 | Fliehkraftsperre | 90 | | 140 | |
| 13a | Feder | 91 | | | Sonderpositionen |
| 13b | Lager | 92 | | | |
| 14 | Dichtelement | 93 | | | |
| 14a | Schraube | 94 | | | |
| 15 | Schraubenhülse | 95 | | | |
| 16 | Achsen | 96 | | | |
| 16a | Planetenräder, Stufenplanetenräder | 97 | | | |
| 17 | Axiallager | 98 | | | |
| 19 | Zahnkranz | 99 | | | |
| 20 | Hohlrad | 100 | | | |

## Patentansprüche

1. Planetengetriebe (50) mit den Komponenten Gehäuse (6), Sonnenrad (5), Hohlrad (20), Steg (3) mit Planetenrädern (16a), zwei bezüglich Öffnen und Schließen entgegengesetzt wirkenden Kupplungseinheiten K1 und K2 einer Kupplung, sowie einem Kupplungsbetätigungselement, wobei eine erste Komponente einen ersten Getriebeanschluss bildet und mit der Antriebswelle (2) eines ersten Antriebsaggregats, vorzugsweise eines Verbrennungsmotors, verbindbar ist, und eine zweite Komponente einen zweiten Getriebeanschluss bildet, der vorzugsweise eine Riemenscheibe (4) umfasst, wobei die erste und zweite Komponente durch die Kupplungseinheiten K1 oder K2 kraftschlüssig miteinander verbindbar sind, **dadurch gekennzeichnet, dass** das Kupplungsbetätigungselement eine Kulissenscheibe (8) mit einer Nut (8a) und einen in der Nut (8a) der Kulissenscheibe geführten Pin (9) umfasst, wobei Kulissenscheibe (8) und Pin (9) relativ zueinander in einem begrenzten Winkel verdrehbar sind.

2. Planetengetriebe nach Anspruch 1, **gekennzeichnet durch** eine radial verlaufende Nut (8a) in der Kulissenscheibe, sodass der Pin (9) in radialer Richtung in die Nut (8a) eingreift.

3. Planetengetriebe nach Anspruch 1, **gekennzeichnet durch** eine axial verlaufende Nut (8a) in der Kulissenscheibe, sodass der Pin (9) in axialer Richtung in die Nut (8a) eingreift.

4. Planetengetriebe nach einem der vorhergehenden Ansprüche, **dadurch gekennzeichnet, dass** die Nut (8a) links- und rechtsseitige Anschlagpunkte für den Pin (9) aufweist, um den Drehwinkel zwischen Kulissenscheibe (8) und Pin (9) zu begrenzen.

5. Planetengetriebe nach Anspruch 4, **dadurch gekennzeichnet, dass** die Kulissenscheibe (8) vor wenigstens einem Anschlagpunkt der Nut (8a) einen etwa keilförmigen Rücksprung (8g) innerhalb der Nut (8a) aufweist, wobei die erhöhte Seite des Rücksprungs (8g) zum Pin (9) und in Richtung des Anschlagpunkts weist, und/oder dass an einem Anschlagpunkt die Nut (8a) einen Rücksprung (8c, 8f) aufweist, sodass ihr spitzer Winkel kleiner als 90° ist.

6. Planetengetriebe nach einem der vorhergehenden Ansprüche, **dadurch gekennzeichnet, dass** die Nut (8a) für das Durchlaufen des Pins (9) eine in sich geschlossene Struktur aufweißt, sodass der Pin (9) durch relatives Verdrehen von Kulissenscheibe (8) und Pin (9) von einem Startpunkt aus zu diesem zurückgeführt werden kann.

7. Planetengetriebe nach einem der vorhergehenden Ansprüche, **dadurch gekennzeichnet, dass** die Kulissenscheibe (8) mehrere etwa konzentrisch oder axial nebeneinander liegende Nutabschnitte (8a, 8b) umfasst, die wenigstens einmal miteinander durch eine Nut verbunden sind.

8. Planetengetriebe nach einem der Ansprüche 4 bis 7, **dadurch gekennzeichnet, dass** die links- und rechtsseitigen Anschlagpunkte bezüglich einer Achse symmetrisch angeordnet sind.

9. Planetengetriebe nach einem der vorhergehenden Ansprüche, **dadurch gekennzeichnet, dass** zwei benachbarte Anschlagpunkte entlang der Nut (8a) eine Winkeldistanz von mehr als 360° aufweisen.

10. Planetengetriebe nach einem der vorhergehenden Ansprüche, **dadurch gekennzeichnet, dass** die Nut (8a) kreisabschnittsförmig ausgebildet ist, wobei sich ihr Radius auf einer vorgegebenen Winkeldistanz ändert.

11. Planetengetriebe nach einem der vorhergehenden Ansprüche, **dadurch gekennzeichnet, dass** an wenigstens einer Stelle der Nut (8a) eine auf der Kulissenscheibe (8) in der Nähe eines Anschlagpunkts angebrachte Fliehkraftsperre (13) in die Nut (8a) eingreifbar ist, sodass der Pin (9) bei Drehmomentübertragung am Anschlagpunkt oder an der Fliehkraftsperre (13) zur Anlage kommt.

12. Planetengetriebe nach einem der vorhergehenden Ansprüche, **dadurch gekennzeichnet, dass** die Nuten (8a) in einer Stirnseite der Riemenscheibe (4) angebracht sind, wobei diese Stirnseite als Kulissenscheibe (8) dient.

13. Planetengetriebe nach einem der vorhergehenden Ansprüche, **dadurch gekennzeichnet, dass** das Kupplungsbetätigungselement ein Gewinde (10) umfasst, um eine Winkeldrehung zwischen Pin (9) und Kulissenscheibe (8) in eine axiale Bewegung umzusetzen.

14. Planetengetriebe nach Anspruch 13, **dadurch gekennzeichnet, dass** das Kupplungsbetätigungselement einen von dem Gewinde (10) in axialer Richtung geführten Kupplungsring (10b) umfasst, der bei axialer Bewegung die Kupplungseinheiten K1 und K2 öffnet bzw. schließt, wobei diese vorzugsweise als Lamellenkupplungen ausgebildet sind.

15. Planetengetriebe nach einem der vorhergehenden Ansprüche, **dadurch gekennzeichnet, dass** die Kulissenscheibe (8) mit dem Hohlrad (20) oder der Sonne (5) oder dem Steg (3) verbunden, oder an der Riemenscheibe (4) ausgebildet ist.

16. Planetengetriebe nach einem der vorhergehenden Ansprüche, **dadurch gekennzeichnet, dass** die erste Komponente der Steg (20) und die zweite Komponente das Sonnenrad (5) oder das Hohlrad (20) ist.

17. Planetengetriebe nach einem der vorhergehenden Ansprüche, **dadurch gekennzeichnet, dass** zwischen dem Gehäuse (6) und der Riemenscheibe (4) ein Ratschenmechanismus (61, 62, 63) ausgebildet ist, mit einem Rampring (63) zum Verbinden des Gehäuses (6) mit dem Hohlrad (20).

18. Planetengetriebe nach einem der vorhergehenden Ansprüche, **dadurch gekennzeichnet, dass** die Nut (8a) wenigstens zwei radiale Teilstücke aufweist, und dass der Pin (9) mit einem mittels eines elastischen Elements (68) vorgespannten Fliehgewichts (67) verbunden ist, wobei der Pin (9) durch das Fliehgewicht (67) drehzahlabhängig in den radialen Teilstücken der Nut (8a) geführt ist.

19. Verfahren zum gezielten Schalten eines zwei Übersetzungsstufen umfassenden Planetengetriebes (50), mit zwei Getriebeanschlüssen, einer eine Nut (8a) umfassende Kulissenscheibe (8) mit einem in der Nut (8a) geführten Pin (9) zur Getriebesteuerung und zur Übertragung des Getriebedrehmoments, wobei das Schalten mittels einer am zweiten Getriebeanschluss angreifenden drehzahlsteuerbaren Antriebseinheit durch gezieltes Beschleunigen oder Verzögern ihrer Drehzahl relativ zur Drehzahl des zweiten Getriebeanschlusses erfolgt, indem sich der in der Nut (8a) der Kulissenscheibe (8) geführte Pin (9) relativ zu dieser um einen Winkel verdreht und abhängig von der Größe der Winkeldrehung zwei bezüglich Öffnen und Schließen entgegengesetzt wirkende Kupplungseinheiten K1 und K2 einer Kupplung (7) betätigt, die ein Umschalten von einer Übersetzungsstufe zur anderen ermöglichen.

20. Verfahren nach Anspruch 19, mit einem am ersten Getriebeanschluss angreifenden Verbrennungsmotor und einer als Startergenerator ausgebildeten drehzahlsteuerbaren Antriebseinheit, welche vorzugsweise im Nebenabrieb betrieben wird.

21. Verfahren nach Anspruch 20, **gekennzeichnet durch** Änderung der Drehzahl des Startergenerators, um den Pin (9) an einem Anschlagpunkt der Nut (8a) zur Anlage zu bringen, der sich **dadurch** auszeichnet, dass bei gleich bleibender Drehzahländerung eine relative Winkeländerung zwischen Pin (9) und Kulissenscheibe (8) begrenzt wird, wodurch die Kulissenscheibe (8) beschleunigt oder verzögert bzw. ein Drehmomentübertrag zwischen Pin (9) und Kulissenscheibe (8) erfolgt.

22. Verfahren nach einem der Ansprüche 20 und 21, **dadurch gekennzeichnet, dass** die Winkeldrehung zwischen Pin (9) und Kulissenscheibe (8) mittels eines Gewindes (10) in eine zur Winkeldrehung proportionale axiale Bewegung zum Öffnen oder Schließen der Kupplungseinheiten K1 oder K2 umgesetzt wird.

23. Verfahren nach Anspruch 18, **gekennzeichnet durch** eine relative Winkeldrehung von ca. 340° bzw. ca. 700° zum Öffnen und Schießen der Kupplungseinheiten K1 oder K2, wobei die Nut (8a) im Winkelabstand von ca. 340° links- und rechtsseitige Anschlagpunkte zur Drehmomentübertragung zwischen Pin (9) und Kulissenscheibe (8) aufweist.

24. Verfahren nach Anspruch 23, **gekennzeichnet durch** eine **durch** gezielte Drehzahlsteuerung des Startergenerators bewirkende Winkeldrehung von Pin (9) und Kulissenscheibe (8) etwa in die Winkelmitte der links- und rechtsseitigen Anschlagpunkte, um beide Kupplungseinheiten K1 und K2 zu öffnen.

25. Verfahren nach einem der Ansprüche 19 bis 24, **dadurch gekennzeichnet, dass** bei nicht rotierendem erstem Getriebeanschluss (2) durch wiederholte Drehrichtungsumkehr der drehzahlsteuerbaren Antriebseinheit die Kulissenscheibe (8) und der Pin (9) am rotierenden Getriebeanschluss (4) mit dem Gehäuse (6) verbindbar sind.

26. Verfahren nach einem der Ansprüche 19 bis 25, **gekennzeichnet durch** Betätigen einer in einen Nutabschnitt eingreifenden Fliehkraftsperre (13), beim Überschreiten einer Drehzahl, zum Begrenzen der relativen Verdrehung von Kulissenscheibe (8) und Pin (9).

27. Verfahren nach einem der Ansprüche 19 bis 26, **gekennzeichnet durch** eine Radialbewegung des mit einem Fliehgewicht (67) verbundenen Pins (9) entlang eines radial verlaufenden Nutabschnitts, die zur Unterbrechung eines Drehmomentübertrags vom ersten auf den zweiten Getriebeanschluss führt, wobei das Fliehgewicht (67) mittels eines elastischen Elements (68) vorgespannt ist.
